# EUROPEAN PATENT SPECIFICATION

(11) **EP 2 762 856 B1**
(45) Date of publication and mention of the grant of the patent: **08.08.2018**
(21) Application number: 12836095.5
(22) Date of filing: 28.09.2012
(51) Int. Cl.: G01N 21/25, G01N 21/45, G01N 21/77

(54) **PHYSICAL/CHEMICAL SENSOR, PHYSICAL/CHEMICAL PHENOMENON SENSING DEVICE, AND METHOD FOR MANUFACTURING SAME**
PHYSIKALISCHER/CHEMISCHER SENSOR, VORRICHTUNG ZUR ERFASSUNG PHYSIKALISCHER/CHEMISCHER PHÄNOMENE UND HERSTELLUNGSVERFAHREN DAFÜR
CAPTEUR PHYSIQUE/CHIMIQUE, DISPOSITIF DE DÉTECTION DE PHÉNOMÈNE PHYSIQUE/CHIMIQUE ET PROCÉDÉ DE FABRICATION DE CEUX-CI

(30) Priority: 30.09.2011 JP 2011218582; 18.05.2012 JP 2012114589; 02.08.2012 JP 2012172374
(43) Date of publication of application: 06.08.2014
(73) Proprietor: National University Corporation Toyohashi University of Technology, Toyohashi-shi Aichi 441-8580 (JP)
(72) Inventor: TAKAHASHI, Kazuhiro, Toyohashi-shi, Aichi 441-8580 (JP); SAWADA, Kazuaki, Toyohashi-shi, Aichi 441-8580 (JP); OYAMA, Hiroki, Hamamatsu-shi, Shizuoka 431-3125 (JP)
(74) Representative: Kuhnen & Wacker Patent- und Rechtsanwaltsbüro PartG mbB
(86) International application number: PCT/JP2012/075182
(87) International publication number: WO 2013/047799

(56) References cited:
- JP-A- 2000 028 931
- JP-A- 2001 228 022
- JP-A- 2001 228 326
- JP-A- 2003 014 641
- JP-A- 2007 112 075
- JP-A- 2007 155 965
- JP-A- 2007 232 402
- JP-A- 2008 076 182
- JP-A- 2009 210 312
- JP-A- 2011 027 780
- US-B1- 6 550 330
- US-B1- 6 763 718
- US-B1- 7 425 453
- ANTOSZEWSKI J ET AL: "Materials and Processes for MEMS-Based Infrared Microspectrometer Integrated on HgCdTe Detector", IEEE JOURNAL OF SELECTED TOPICS IN QUANTUM ELECTRONICS, IEEE SERVICE CENTER, PISCATAWAY, NJ, US, vol. 14, no. 4, 2008, pages 1031-1041, XP011232087, ISSN: 1077-260X, DOI: 10.1109/JSTQE.2008.919741
- BERGSTEIN D A ET AL: "Resonant Cavity Imaging: A Means Toward High-Throughput Label-Free Protein Detection", IEEE JOURNAL OF SELECTED TOPICS IN QUANTUM ELECTRONICS, IEEE SERVICE CENTER, PISCATAWAY, NJ, US, vol. 14, no. 1, 2008, pages 131-139, XP011292512, ISSN: 1077-260X
- TIANHUA ZHANG ET AL.: 'A white-light source operated polymer-based micromachined Fabry- Perot chemo/biosensor' PROCEEDINGS OF THE 2009 4TH IEEE INTERNATIONAL CONFERENCE ON NANO/MICRO ENGINEERED AND MOLECULAR SYSTEMS 05 January 2009, pages 181 - 184, XP031470663

## Description

### [Technical field]

The present invention relates to a light-interference-type physical/chemical sensor. In particular, the present invention relates to a light-interference-type physical/chemical sensor for detecting a molecule contained in a gas or a liquid, to a physical/chemical phenomenon sensing device using the physical/chemical sensor, and to a manufacturing method of the same.

### [Background art]

In recent years, as represented by a fuel cell, technologies using hydrogen gas as an energy source have been developed and are spreading. In connection with this, sensors for detecting the hydrogen gas are emphasized. It is considered to be important to detect emission of gases (for instance, carbon dioxide or nitrogen dioxide), which can induce environmental pollution, for environmental protection. Detection of gases containing components used for explosives (for instance, trinitrotoluene: TNT, trimethylenetrinitramine: RDX, or the like) is useful for discovering a mine. Furthermore, in medical sites, in order to determine whether a patient is suffering a specific disease by detecting an antibody of a specific kind or an antigen of a specific kind, a sensor for detecting a specific protein that forms the antibody or antigen is emphasized.

Therefore, in the medical sites, as a method for specifying protein of a specific kind, fluorescent label technology using a fluorescence label has been used. This technology causes an activated fluorescent group to react with protein, thereby using it as a label. Multiple kinds of protein can be detected at the same time, and handling of the fluorescent dye is easy. Therefore, the technology has been used widely. However, with this fluorescent label technology, there has been a concern that the protein structure could be degraded due to reaction with the fluorescent group. Moreover, there has been a problem about quantitative evaluation that location of the fluorescent group modification and control of the number of the labels were difficult.

As a measure for solving the above-mentioned problems, a sensor that does not use a label, or a label-free sensor, is proposed. That is, an antibody molecule that causes specific adsorption to a specific acceptor is fixed on the sensor, and bending stress caused by the adhesion of target protein is sensed. As one of prior art examples of such sensors, a sensor that uses a character that resonant frequency shifts with change of mass due to the adhesion of the protein (Quarts Crystal Microbalance: QCM) and a sensor that uses change of an index of refraction by surface plasmon resonance (Surface Plasmon Resonance: SPR) are known. Moreover, a sensor that optically senses a bending state of a cantilever (refer to Non-patent documents 1 and 2), a cantilever-type sensor that uses a piezoresistance (refer to Non-patent documents 3 and 4), and a sensor that senses a capacitance change (refer to Non-patent documents 5 and 6) are proposed.

### [Prior art document]

### [Non-patent document]

[Non-patent document 1]
   J. R. Barnes, R. J. Stephenson, M. E. Welland, C. Gerber, and J. K. Gimzewskli, "Photothermal spectroscopy with femtojoule sensitivity using a micromechanical device," Nature, vol. 372, pp.79-81, 1994.
[Non-patent document 2]
   D. A. Raorane, M. D. Lim, F. F. Chen, C. S. Craik, and A. Majumdar, "Quantitative and label-free technique for measuring protease activity and inhibition using a microfluidic cantilever array," Nano letters, vol. 8, pp. 2968-2974, 2008.
[Non-patent document 3]
   X. Yu, Y. Tang, H. Zhang, T. Li, and W. Wang, "Design of high-sensitivity cantilever and its monolithic integration with CMOS circuits," IEEE Sensors Journal, vol. 7, no. 4,pp. 489-495, 2007.
[Non-patent document 4]
   G. Yoshikawa, T. Akiyama, S. Gautsch, P. Vettiger, and H. Rohrer, "Nanomechanical membrane-type surface stress sensor," Nano letters, vol. 11, no 3, pp. 1044-1048, 2011.
[Non-patent document 5]
   S. Satyanarayana, D. T. McCormick, and A. Majumdar, "Parylene micro membrane capacitive sensor array for chemical and biological sensing," Sensors and Actuators B, vol. 115, pp. 494-502, 2006.
   [Non-patent document 6]
M. Cha, J. Shin, J.-H. Kim, I. Kim, J. Choi, N. Lee, B.-G. Kim, and, J. Lee, "Biomolecular detection with a thin membrane transducer," Lab on a Chip, vol. 8, pp. 932-937, 2008.

US 7 425 453 B1 (HUTCHENS CHRIS [US] ET AL; 16 September 2008) discloses an optical Fabry-Perot chemical sensor according to the preamble of claim 1.

US 6 763 718 B1 (WATERS RICHARD L [US] ET AL; 20 July 2004), ANTOSZEWSKI J ET AL: "Materials and Processes for MEMS-Based Infrared Microspectrometer Integrated on HgCdTe Detector",I EEE JOURNAL OF SELECTED TOPICS IN QUANTUM ELECTRONICS, IEEE SERVICE CENTER, PISCATAWAY, NJ, US, vol. 14, no. 4, 2008, pages 1031-1041, ISSN: 1077-260X, DOI: 10.1109/JSTQE.2008.919741, and US 6 550 330 B1 (WATERS RICHARD L [US] ET AL; 22 April 2003) disclose MEMS-based Fabry-Perot interferometers.

### [Summary of the invention]

### [Problems to be solved by the invention]

Among the above-mentioned conventional technologies, the QCM requires production of a quartz oscillator. Therefore, it is difficult to array the QCMs to detect multiple biomolecules. In the case of the sensor that adopts the optical reading system like the SPR sensor or the sensor that optically senses the bending state of the cantilever, there is a possibility that an error arises in the sensing result of the reflected light unless a reflection angle of the light is adjusted precisely. As a result, alignment is complicated and it is difficult to array the sensors. The cantilever-type sensor using the piezoresistance or the sensor that senses the capacitance change can electrically detect existence or non-existence of the biomolecule on the semiconductor chip. Therefore, the device size can be reduced and the sensors can be arrayed.

However, the cantilever-type sensor using the piezoresistance recognizes mechanical bending of the cantilever as the change of the resistance by the piezoelectric element, and efficiency of conversion from the bending amount of the cantilever into the amount of change of the resistance is low. In addition, the cantilever is made of silicon and has high Young's modulus (130 -160 GPa). Therefore, even when the device is manufactured in a comparatively large size (500-1000 µm in diameter), a theoretical detection limit converted into the surface stress is approximately 0.1 mN/m. Accordingly, the sensor has a problem that a bending amount necessary and sufficient for detecting a minute intermolecular force resulting from the biomolecules cannot be obtained. Furthermore, the biomolecule should be adhered only to the front side in order to cause the bending of the cantilever efficiently. At that time, in order to prevent the biomolecule from adhering to the back side, treatment such as fixing a blocking material is necessary, whereby the manufacturing process is complicated.

The sensor that senses the capacitance change is not suitable for measurement with high sensitivity (several fF) because the change of the capacitance is very small. In order to enable highly sensitive measurement, future research has to be studied. Moreover, the above problems arise also in the case where other substances than the protein are detected. A sensor and a sensing device capable of detecting a specific substance with sufficient sensitivity have been desired.

The present invention was made in consideration of the above and an object of the present invention is to provide a physical/chemical sensor and a physical/chemical phenomenon sensing device that can detect minute change of surface stress and can be reduced in size and arrayed and to provide a method for manufacturing the same.

### [Means for solving the problems]

The present invention is defined in claims 1, 7, 9 and 12, each comprising the features of claim 1.

An aspect of the present invention concerning a physical/chemical sensor has a membrane section provided on a surface of a light receiving surface of a light receiving element such that the membrane section forms an air-gap and faces the light receiving surface. The membrane section has optical transparency and flexibility. The membrane section and the light receiving surface form a Fabry-Perot resonator. The membrane section has a substance fixation ability at least on its outside surface.

In the above construction, the Fabry-Perot resonator is formed by the light receiving surface of the light receiving element and the membrane section. Accordingly, lights having different wavelengths resonate in accordance with a bending state of the membrane section, so transmittance for a specific wavelength changes. Therefore, the bending state of the membrane section can be sensed by measuring the change of the intensity of the transmitted light having the specific wavelength as a photocurrent. If a molecule fixes to the outside surface of the membrane section, surface stress to the membrane section changes and the membrane section bends due to an intermolecular force. The fixation state of the molecule can be estimated by grasping the deflection of the membrane section.

The meaning of the term "fixation ability" is to have a capability of fixing a molecule or other substances to the membrane section surface by adsorption, bond or the like, but the fixation ability does not limit the mode of fixation. If precious metal (for instance, gold or the like) exists on the outside surface of the membrane section in order to provide such the substance fixation ability, a half mirror can be formed with the precious metal.

Another aspect of the present invention concerning the physical/chemical sensor has a membrane section provided on a surface of a light receiving surface of a light receiving element such that the membrane section forms an air-gap and faces the light receiving surface, and has a molecule fixation membrane deposited on the surface of the membrane section for fixing a molecule contained in a gas or a liquid. The membrane section has optical transparency and flexibility. The membrane section and the light receiving surface form a Fabry-Perot resonator.

With the above construction, like the above aspect of the present invention, the bending state of the membrane section can be detected with the Fabry-Perot resonator. Specifically, the molecule fixation membrane is provided only on the outside surface of the membrane section. Therefore, the molecule, which is to be fixed, exerts an intermolecular force on the surface of the membrane section and bends the membrane section in a predetermined direction. If the molecule fixation membrane fixes only a specific molecule, existence of the molecule contained in the gas or the liquid can be detected, and the sensor functions as a sensor for the above-mentioned molecule.

Another aspect of the present invention concerning the physical/chemical sensor having the above-mentioned molecule fixation membrane may be constructed such that the molecule fixation membrane is a molecule fixation membrane for fixing a molecule contained in a specific gas.

With the above-mentioned construction, the molecule contained in the gas can be fixed onto the surface of the membrane section. Therefore, by grasping the fixation of the molecule, existence of the gas can be detected. Thus, the sensor can be used as a gas sensor. In particular, the sensor can be used as a gas sensor capable of detecting a gas, detection of which is necessary, such as an inflammable gas (for instance, hydrogen gas or the like), a gas that can affect the environment (for instance, carbon dioxide, nitrogen dioxide or the like), or a gas contained in explosives (for instance, TNT or RDX).

Another aspect of the present invention concerning the physical/chemical sensor may be constructed such that the molecule fixation membrane is a biopolymer fixation membrane for fixing a biopolymer.

With the above construction, the biopolymer fixation membrane deposited on the surface of the membrane section can fix a polymeric molecule (for instance, antibody, deoxyribonucleic acid (DNA), ribonucleic acid (RNA) or the like), which includes amino acid, nucleic acid or a polysaccharide and constitutes a living organism, to the membrane section surface. Therefore, existence of such polymeric molecules contained in a body fluid can be detected.

Another aspect of the present invention concerning the physical/chemical sensor having the molecule fixation membrane may be constructed such that the molecule fixation membrane is an antibody fixation membrane for fixing an antibody.

With the above construction, an antibody can be fixed to the surface of the membrane section, and binding of a specific protein (antigen) to the antibody can be detected. Accordingly, the sensor can be used as an antigen sensor or a protein sensor. In this case, a probe molecule (antibody) that binds with a specific protein (antigen) may be fixed to the antibody fixation membrane on the surface of the membrane section beforehand. Thus, change in the intermolecular force due to the binding of the specific protein (antigen) to the probe molecule (antibody) can be detected. Therefore, by comparing intensity of the transmitted light in the state where the antibody is fixed beforehand and the intensity of the subsequent transmitted light, existence of the substance that binds to the antibody fixed to the surface of the membrane section can be detected.

Another aspect of the present invention concerning the physical/chemical sensor having the antibody fixation membrane as the molecule fixation membrane may be constructed such that the antibody fixation membrane is an antibody fixation membrane constituted with a material having an amino group.

With the above construction, an antibody (probe molecule) that binds with the amino group electrically can be fixed to the antibody fixation membrane deposited on the surface of the membrane section. By fixing a probe molecule (antibody) that binds with specific protein to the antibody fixation membrane, existence or non-existence of the specific protein can be detected.

Another aspect of the present invention concerning the physical/chemical sensor having the antibody fixation membrane constituted with the materials containing the amino group is characterized in that the membrane section is constituted with parylene-C or parylene-N, and the antibody fixation membrane is constituted with parylene-AM. Parylene is a general term for para-xylylene polymers and has a structure in which benzene rings are connected through CH₂. The parylene-N is the parylene having the above-mentioned structure. The parylene-C is the parylene in which one of the benzene rings is substituted by CI. The parylene-A is the parylene having an amino group in the side chain. The parylene-AM is the parylene in which a methyl group and an amino group are combined with the side chain in series.

With the above construction, light transmittance of the membrane section and the antibody fixation membrane can be increased, and the Young's modulus of the membrane section can be reduced. Accordingly, while the light entering the light receiving element can be fully used, the membrane section can be bent with small surface stress to the membrane section. Moreover, since the parylene-A and the parylene-AM have the amino group in the side chain, the antibody (probe molecule) that binds with the amino group can be fixed to the surface.

Another aspect of the present invention may further have a metal film deposited on a part or entirety of the surface of the membrane section, the molecule fixation membrane or the antibody fixation membrane. The construction in which the metal film is deposited on the surface of the membrane section includes a case where no other membrane is deposited on the outside surface of the membrane section and a case where the molecule fixation membrane or the antibody fixation membrane is deposited on the surface of the membrane section. In the case where the molecule fixation membrane or the antibody fixation membrane is deposited, the metal film is deposited between the membrane section and the molecule fixation membrane or the antibody fixation membrane.

In the case of the above construction, the metal film deposited on the surface of the membrane section or the like functions as a half mirror. Therefore, reflectance of the light transmitted through the membrane section can be improved. As a result, selectivity of the wavelength (interference wavelength) that interferes inside the Fabry-Perot resonator formed between the light receiving element and the membrane section (i.e., inside air-gap) can be improved, and half width (half width at half maximum) of the interference wavelength can be narrowed. By narrowing the half width (half width at half maximum) of the interference wavelength, the transmittance of the light having the specific wavelength causes a significant change due to the bending of the membrane section, whereby signal transmission efficiency as a transducer can be improved. The metal film may be deposited on the entire surface of the membrane section and the like. Alternatively, the metal film may be deposited only on a part of the surface to limit the light, with which the membrane section is irradiated, to a predetermined area (i.e., area where metal film is formed).

The above construction may have a metal film deposited on the light receiving surface of the light receiving element.

In this case, a half mirror is formed by the metal film on the light receiving surface of the light receiving element. If the half mirror is formed by using the metal material for the membrane section or by deposition of the metal film also on the membrane section side, the reflectance of the light transmitted though the membrane section improves on the light receiving surface of the light receiving element and the membrane section. Therefore, selectivity of the interference wavelength in the Fabry-Perot resonator (i.e., inside air-gap) improves further. Thus, the half width of the interference wavelength narrows further, and the signal transmission efficiency improves further.

In the formation of the metal film, the metal film may be formed with gold, silver, or copper. Absorption coefficients of gold, silver and copper are relatively low. Therefore, by forming the metal film with these metals, a half mirror with high transmittance and reflectance can be provided. Thus, the transmitted light with narrow half width can be outputted to the light receiving element side with appropriate intensity.

Any light receiving element capable of converting the light electrically may be used for the physical/chemical sensor. Typical examples of the light receiving element are a photodiode, a phototransistor and a photo IC. When one of these elements is used as the light receiving element, the light receiving element can be formed on a semiconductor substrate easily, whereby a cheap sensor can be obtained.

The air-gap formed between the light receiving surface of the light receiving element and the membrane section may be blocked air-tightly or liquid-tightly at least on the membrane section side. Blocking air-tightly means a state where passage of the gas can be blocked. Blocking liquid-tightly means a state where passage of the liquid can be blocked. The airtight blocking or the liquid-tight blocking may be selected according to whether the detection object is the gas or the liquid. In this way, since the air-gap is blocked air-tightly or liquid-tightly from the environment at least on the membrane section side, the gas or the liquid does not flow into the air-gap. Specific substance contained in the gas or the liquid is fixed only to the surface of the membrane section. Due to the fixation of the substance, existence of the substance can be detected.

A sensor array using the physical/chemical sensor of each of the above-mentioned aspects of the present invention is characterized in that multiple physical/chemical sensors are formed on the same substrate.

With the above-mentioned construction, substances (molecules) of multiple kinds can be detected simultaneously. For instance, by fixing antibodies of different kinds to the surface of the membrane section beforehand, it becomes possible to detect existence of specific proteins (antigens), which bind only with the different antibodies, simultaneously. Regarding such the sensor array, the physical/chemical sensors can be arrayed by producing multiple light receiving elements on the same substrate by a semiconductor process technology and by forming the membrane sections by the semiconductor process technology.

The sensor array having the above construction may be formed on the substrate equipped with a signal processing circuit. The signal processing circuit may be a source follower circuit using MOSFET and the like. The signal processing circuit may output a change in a current detected with each sensor in the form of a voltage. By providing a selection circuit, an individual detection value can be obtained from the multiple sensors.

Another aspect of the present invention concerning a physical/chemical phenomenon sensing device is a physical/chemical phenomenon sensing device using one of the above-described physical/chemical sensors. The physical/chemical phenomenon sensing device has the above-mentioned physical/chemical sensor and a reference sensor. The reference sensor uses a light receiving element of the same kind as the light receiving element used for the physical/chemical sensor. The reference sensor is constructed such that a surface of the light receiving surface thereof is exposed. Exposing the light receiving surface of the light receiving element herein means a state where the various materials deposited to construct the membrane section and the like formed in the light receiving element used for the physical/chemical sensor are not provided (naturally, air-gap is not formed). In addition, exposing the light receiving surface of the light receiving element means a state where a silicon dioxide film formed as a protection film of an ion implantation at the time of production of the light receiving element (for instance, photodiode) or a silicon dioxide film or the like formed as a film for protection from an etching gas (xenon difluoride gas or the like) used during the production of the physical/chemical sensor are removed and nothing is deposited on the surface of the light receiving surface.

In the above construction, the Fabry-Perot resonator is not formed in the reference sensor. Therefore, even if the same substance as the substance supplied to the physical/chemical sensor (hereafter, referred to also as detection sensor) is supplied to the reference sensor, the transmittance characteristic of the light detected by the reference sensor does not change unlike the detection sensor. However, if the supplied substance has a possibility to reduce the light transmittance as its own characteristic (for instance, if substance has pigment as in blood), the amount of the light detected with the light receiving element in the reference sensor reduces. As a result, the reference sensor can detect change of the transmitted light due to the specific light transmittance of the supplied substance (for instance, substance that has pigment like blood). Therefore, by comparing with the transmitted light in the detection sensor, it can be determined whether the change of the transmitted light detected by the detection sensor is caused by the bending of the membrane section or by the specific light transmittance of the supplied substance. Also when the transmitted light changes due to influence of the both, the degree of the change caused by the bending of the membrane section can be calculated.

Another aspect of the present invention concerning the physical/chemical phenomenon sensing device uses either one of the above-mentioned physical/chemical sensors. The physical/chemical phenomenon sensing device has the physical/chemical sensor and a reference sensor. The reference sensor has a membrane section of the same kind as the membrane section, which is used for the physical/chemical sensor, provided on a surface of a light receiving surface of a light receiving element of the same kind as the light receiving element, which is used for the physical/chemical sensor, without forming an air-gap.

Also in the above construction, the reference sensor has no air-gap. Therefore, even if a specific substance (for instance, molecule) is fixed to the membrane section of the reference sensor or the like, the membrane section does not bend and the light transmission characteristic does not change. When the substance supplied to the membrane section or the like has a characteristic to reduce the light transmittance, the light intensity sensed with the light receiving element in the reference sensor decreases irrespective of whether the substance is fixed to the membrane section or the like or not. Thus, the change of the transmitted light due to the light transmittance specific to the supplied substance can be sensed. Therefore, also with the sensing device of the above construction, the change of the light transmittance sensed with the detection sensor may be compared with the change of the light transmittance sensed with the reference sensor. Thus, it may be determined whether the change of the light transmittance is caused by the character of the substance itself (e.g., pigment) or by the fixation of the substance to the membrane section or the like. When both sensors sense the change of the light transmittance, the degree of the change of the light transmittance caused by the fixation of the substance on the membrane section or the like can be sensed by comparing the amounts of the change of the light transmittance.

In the physical/chemical phenomenon sensing device having the above construction, the physical/chemical sensor and the reference sensor may be formed on the same substrate.

With the above construction, the detection sensor and the reference sensor can be arranged on the single substrate, and therefore, the same substance can be supplied to the both sensors at the same time. Naturally, the sensed values on the same testing conditions can be compared. Since the both sensors are provided on the same substrate, by providing the membrane sections at the same time, the membrane sections having the similar thickness are formed in the both sensors. Thus, not only the testing conditions but also the forming conditions of the membrane sections can be equalized. The number of the detection sensor and the reference sensor is not limited to one each. Alternatively, a plurality of both or either of them may be provided. In this case, different substances (molecules) corresponding to the characteristics of the molecule fixation abilities of the surfaces of the membrane sections of the detection sensors can be measured while comparing them with the reference sensor(s).

In the case where a plurality of both or either of the detection sensors and the reference sensors are provided on the same substrate, a processing circuit may be provided on the substrate, and further a selection circuit may be provided. In this case, the selection circuit can cause a specific sensor of the multiple sensors to output a sensing value. As the signal processing circuit, for instance, a source follower circuit based on MOSFET may be used to convert a current sensed with the light receiving element into a voltage.

The light receiving elements used for the detection sensor and the reference sensor are required only to have an ability to convert the light electrically. For instance, if a photodiode, a phototransistor, a photo IC or the like produced on the semiconductor substrate is used, a cheap sensing device can be obtained.

Another aspect of the present invention concerning a method for manufacturing a physical/chemical sensor has a sacrificial layer forming step for forming a sacrificial layer by depositing a material, which can be etched, on a light receiving surface of a light receiving element, a protection layer forming step for deposition of a protection layer on an area excluding the surface of the sacrificial layer, a membrane section forming step for forming a membrane section by depositing a membrane section constituent material on a membrane section construction area excluding a through area for etching on the surface of the sacrificial layer, a sacrificial layer removing step for etching the sacrificial layer through the through area for etching, and a through area for etching sealing step for coating the through area for etching. A pre-manufactured light receiving element is used. For instance, the light receiving element is a photodiode, a phototransistor, photo IC or the like manufactured by semiconductor manufacturing process.

With the above construction, the sacrificial layer is removed, and the membrane section formed on the surface of the sacrificial layer can form an air-gap between the light receiving surface of the light receiving element and the membrane section. Because of the existence of the air-gap, a Fabry-Perot resonator can be formed on the surface of the light receiving element. Furthermore, by coating the through area for etching used for removing the sacrificial layer, the air-gap can be blocked air-tightly or liquid-tightly at least on the membrane side. Thus, inflow of a test gas, a test liquid or a cleaning fluid into the air-gap can be prevented. By using a material having a substance fixation ability as the membrane section constituent material, it becomes possible to fix substance (molecule or the like) to the outside surface of the membrane section. Thus, the surface stress due to the intermolecular force of the fixed substance (molecule or the like) can be applied to the membrane section. By using the semiconductor manufacturing process technology as each step, the manufacturing can be performed by the semiconductor manufacturing process.

Another aspect of the present invention concerning the manufacturing method of the physical/chemical sensor further has a first metal film forming step for forming a first metal film by depositing a first metal film constituent material on the light receiving surface of the light receiving element. The sacrificial layer forming step is a step for forming the sacrificial layer on the surface of the first metal film constituent material.

In the case of the above construction, the first metal film can be formed on the light receiving surface of the light receiving element. Thus, a half mirror can be formed on the light receiving surface with the first metal film. If the membrane section constituent material of the above aspect of the present invention is a metal material, the membrane section is a movable membrane having the substance fixation ability and also functions as a half mirror. Thus, a Fabry-Perot resonator that improves the reflection efficiency of the light transmitted through the membrane section can be constructed.

The first metal film forming step of the above construction may deposit the first metal film constituent material by a sputtering method or a vapor-deposition method. In the case of such the construction, a half mirror with high transmittance and high reflectance can be formed on the light receiving surface of the light receiving element.

Another aspect of the present invention concerning the method for manufacturing the physical/chemical sensor further has a molecule fixation membrane forming step for deposition of a molecule fixation material on the surface of the membrane section constituent material.

With the above construction, a material that does not have a molecule fixation ability can be used as the material for forming the membrane section. In addition, the molecule fixation membrane that can fix the molecule can be provided on the surface of the membrane section according to the kind of the molecule to be fixed. Therefore, the sensor capable of fixing the molecule to the surface of the membrane section can be manufactured. Specifically, the molecule fixation material may be deposited not only on the surface of the membrane section but also on the part where the through area for etching is coated at the same time. Thus, air-tightness or liquid-tightness can be improved in the air-gap on the membrane section side if needed.

Another aspect of the present invention concerning the manufacturing method further has a second metal film forming step for forming a second metal film by depositing a second metal film constituent material on a part or entirety of the surface of the membrane section constituent material or the molecule fixation material.

With such the construction, a half mirror can be formed with the second metal film on the surface of the membrane section formed by the membrane section forming step or the molecule fixation membrane formed by the molecule fixation membrane forming step. Thus, a sensor improving the reflectance of the light transmitted through the membrane section can be manufactured.

In the above construction, the second metal film forming step may deposit the second metal film constituent material by a sputtering method or a vapor-deposition method. Thus, as in the case where the first metal film constituent material is deposited, a half mirror with high transmittance and high reflectance can be formed.

The step for deposition of the molecule fixation material according to the above aspect of the present invention may be a biopolymer fixation membrane forming step for deposition of a biopolymer fixation material on the surface of the membrane section constituent material or the second metal film constituent material.

With the above construction, the sensor capable of fixing the biopolymer on the surface of the membrane section or the second metal film can be manufactured. That is, an antibody, DNA, RNA or the like can be fixed to the surface of the membrane section, and the sensor for detecting a specific biopolymer from a body fluid can be manufactured.

The step for deposition of the molecule fixation material according to the above aspect of the present invention may be an antibody fixation membrane forming step for deposition of an antibody fixation material on the surface of the membrane section constituent material or the second metal film constituent material.

With the above construction, the sensor capable of fixing a specific antibody to the surface of the membrane section or the second metal film can be manufactured. In that case, a specific protein (antigen) can further bind to the antibody fixed to the antibody fixation membrane formed by the antibody fixation membrane forming step. Thus, a protein sensor for detecting the existence of the protein (antigen) can be manufactured.

Another aspect of the present invention concerning the manufacturing method of the physical/chemical sensor is characterized in that the step for depositing the membrane section constituent material is a step for vapor-depositing parylene-N or parylene-C.

With the above construction, by adjusting an amount of a raw-material dimer in the vapor-deposition, a monomer gas supply amount of polyparaxylylene can be controlled. Accordingly, film thickness of the parylene-N or the parylene-C at the time when the polymer membrane is formed after aggregation can be adjusted. Thus, a membrane with desired thickness can be formed easily.

Another aspect of the present invention concerning the manufacturing method of the physical/chemical sensor is characterized in that the step for depositing the molecule fixation material is a step for vapor-depositing parylene-A or parylene-AM.

With the above construction, the antibody fixation membrane, which can fix an amino group, can be deposited on the surface of the membrane section formed by the membrane section forming step.

Another aspect of the present invention concerning a method for manufacturing a physical/chemical phenomenon sensing device has a sacrificial layer forming step for segmenting multiple light receiving elements formed on the same substrate into two kinds consisting of one kind for detection sensor or sensors and another kind for reference sensor or sensors and for forming a sacrificial layer by depositing a material, which can be etched, on a light receiving surface of the light receiving element for the detection sensor, a protection layer forming step for deposition of a protection layer on an area excluding the surface of the sacrificial layer and the light receiving surface of the light receiving element for the reference sensor, a membrane section forming step for forming a membrane section by depositing a membrane section constituent material on a membrane section construction area on the surface of the sacrificial layer excluding a through area for etching and the light receiving surface of the light receiving element for the reference sensor, a sacrificial layer removing step for etching the sacrificial layer through the through area for etching, and a through area for etching sealing step for coating the through area for etching. As the light receiving elements, multiple photodiodes or the like manufactured on the same substrate by semiconductor manufacturing process may be used.

With the above construction, as mentioned above, while the membrane section is formed on the surface of the light receiving element for the detection sensor above the air-gap, the membrane section is formed in the reference sensor without forming the air-gap. The other construction is the same between the construction for the detection sensor and the construction for the reference sensor than the existence or non-existence of the air-gap. Thus, the sensing device having the sensor(s) for detection and the sensor(s) for reference can be manufactured, and the device capable of detecting the physical/chemical phenomenon such that comparison is possible can be provided.

In the above aspect of the present invention, the light receiving element for the detection sensor may include a first or second metal film forming step for forming a half mirror, and a molecule fixation membrane forming step. The molecule fixation membrane forming step may be a biopolymer fixation membrane forming step, and a specific material may be used for the membrane section forming step or the antibody fixation membrane forming step. In this case, effects similar to those of the above-mentioned manufacturing process of the physical/chemical sensor can be obtained. With the deposition of the membrane section constituent material or the like for forming the Fabry-Perot resonator on the light receiving element for the detection sensor, a similar membrane section constituent material or the like is deposited also on the light receiving surface of the light receiving element for the reference sensor. Regarding this point, a step for removing the membrane section constituent material or the like by etching or the like may be included only for the light receiving element for the reference sensor. By including such the step, a sensing device can be manufactured such that the light receiving surface is exposed only for the light receiving element for the reference sensor.

### [Effects of the invention]

According to the present invention concerning the physical/chemical sensor, change of the intermolecular force due to the substance (molecule or the like) fixed to the membrane section can be measured based on the bending state of the membrane section formed on the surface side of the light receiving element. Thus, it can be detected whether the substance is fixed to the membrane section. In particular, change of the intermolecular force due to the immobilization of the biomolecule can be measured. Therefore, existence of specific protein (antigen) can be detected by fixing a specific probe molecule (antibody) to the surface of the membrane section beforehand, and by measuring intensity of light having a specific wavelength before and after supply of the substance to be examined. Furthermore, in the above, subsequent to the formation of the light receiving element, semiconductor manufacturing process technology may be used to manufacture the device in a small size and to array the sensors.

Measurement of the intermolecular force due to the adhesion of the substance (probe molecule or other molecule) is based on the change of the bending state of the membrane section. The change of the bending state of the membrane section can be determined based on the intensity of the light having a specific wavelength and transmitted through the Fabry-Perot resonator. Therefore, complicated optical alignment is not needed for measurement of the intermolecular force, but the intermolecular force can be measured electrically on a chip.

Furthermore, the mechanical deflection resulting from the intermolecular force can be measured efficiently by forming the membrane section with a flexible material other than silicon. When parylene is used, the surface stress of 1 µN/m or lower can be detected theoretically. This means that the minimum detectable surface stress is two orders of magnitude greater than that of a conventional piezoresistance-type sensor.

With the physical/chemical sensor having the half mirror formed with the metal film, the light transmitted through the membrane section can be reflected sufficiently inside the Fabry-Perot resonator (inside of air-gap), and the half width of the wavelength of the interfering light can be narrowed. Therefore, the transmittance causes a steep change with respect to the displacement of the membrane section due to the bending, thereby improving the signal conversion efficiency obtained through the light receiving element. Specifically, when measuring an opaque liquid or the like, the transmittance of the light reduces. Even under such the conditions, the signal conversion efficiency can be improved by narrowing the half width of the interference wavelength.

According to the present invention concerning the physical/chemical phenomenon sensing device, the change of the light transmittance by the detection sensor and the change of the light transmittance by the reference sensor are measured. Therefore, it can be determined whether the reduction of the light transmittance detected by the detection sensor is reduction accompanying fixation of a specific substance. The degree of the fixation of the specific substance can be also measured by comparing the both sensors. Quantitative estimation for the concentration is possible.

Also in the case where the specific protein or the like is detected from the body fluid that is not transparent such as blood, it can be determined whether the change of the light transmittance is caused because the light transmittance is reduced by the blood itself or because a specific protein or the like is fixed. Therefore, it becomes possible to detect existence of very small quantity of specific substance by using the physical/chemical phenomenon sensing device of the present invention.

With the method for manufacturing the physical/chemical sensor according to the present invention, the physical/chemical sensor can be manufactured by the semiconductor manufacturing process subsequent to the production of the light receiving element. Therefore, very small sensors can be manufactured. Moreover, since the air-gap between the light receiving surface of the light receiving element and the membrane section is blocked from the environment by coating the through area for etching, subsequent process is facilitated. Specifically, sealing process after forming the array can be performed in batch.

With the method for manufacturing the physical/chemical phenomenon sensing device according to the present invention, the reference sensor can be manufactured simultaneously in the process for manufacturing the detection sensor. Therefore, the detection sensor and the reference sensor are manufactured under the same conditions (for example, at the same thickness) with the same material. Since the sensors can be manufactured on the same substrate in batch, they can be manufactured promptly and easily. Since the sensing device manufactured in this way is formed on the single substrate, the device can be also used as a testing chip.

### [Brief description of the drawings]

[Fig. 1] Fig. 1 is an explanatory diagram showing a first embodiment of a physical/chemical sensor.
[Fig. 2] Fig. 2 is an explanatory diagram showing a second embodiment of a physical/chemical sensor.
[Fig. 3] Fig. 3 is an explanatory diagram showing an example of a sensor array.
[Fig. 4] Fig. 4 is an explanatory diagram showing a first embodiment of a physical/chemical phenomenon sensing device.
[Fig. 5] Fig. 5 is an explanatory diagram showing an operation mode of the physical/chemical phenomenon sensing device.
[Fig. 6] Fig. 6 is an explanatory diagram showing a second embodiment of a physical/chemical phenomenon sensing device.
[Fig. 7] Fig. 7 is an explanatory diagram showing another embodiment of a physical/chemical phenomenon sensing device.
[Fig. 8] Fig. 8 is an explanatory diagram showing a modified example of a physical/chemical phenomenon sensing device.
[Fig. 9] Fig. 9 is an explanatory diagram showing a former half process of a first embodiment of a manufacturing method of a physical/chemical sensor.
[Fig. 10] Fig. 10 is an explanatory diagram showing a later half process of the first embodiment of the manufacturing method of the physical/chemical sensor.
[Fig. 11] Fig. 11 is an explanatory diagram showing a later half process of a second embodiment of a manufacturing method of a physical/chemical sensor.
[Fig. 12] Fig. 12 is an explanatory diagram showing a later half process of a third embodiment of a manufacturing method of a physical/chemical sensor.
[Fig. 13] Fig. 13 is an explanatory diagram showing an example of a manufacturing method of a sensor array.
[Fig. 14] Fig. 14 is an explanatory diagram showing a former half process of an embodiment of a manufacturing method of a physical/chemical phenomenon sensing device.
[Fig. 15] Fig. 15 is an explanatory diagram showing a later half process of an embodiment of a manufacturing method of a physical/chemical phenomenon sensing device.
[Fig. 16] Fig. 16 is an explanatory diagram showing a later half process of a modified example of the embodiment of the manufacturing method of the physical/chemical phenomenon sensing device.
[Fig. 17] Fig. 17 is an explanatory diagram showing a later half process of a modified example of the embodiment of the manufacturing method of the physical/chemical phenomenon sensing device.
[Fig. 18] Fig. 18 is an explanatory diagram showing a modified example of a physical/chemical sensor.
[Fig. 19] Fig. 19 is an explanatory diagram showing another modified example of a physical/chemical sensor.
[Fig. 20] Fig. 20 is an explanatory diagram showing a further modified example of a physical/chemical sensor.
[Fig. 21] Fig. 21 is an explanatory diagram showing another embodiment of the manufacturing method of the physical/chemical sensor.
[Fig. 22] Fig. 22 is an explanatory diagram showing a modified example of a physical/chemical phenomenon sensing device.
[Fig. 23] Fig. 23 is a photograph and an SEM image of a physical/chemical sensor manufactured as an example embodiment 1.
[Fig. 24] Fig. 24 is a graph showing an analysis result of the physical/chemical sensor (protein sensor) manufactured as the example embodiment 1.
[Fig. 25] Fig. 25 is a graph showing a photocurrent value of a photodiode of the example embodiment 1.
[Fig. 26] Fig. 26 is an optical microscope photograph of a physical/chemical phenomenon sensing device manufactured as an example embodiment 2.
[Fig. 27] Fig. 27 is a graph showing a photocurrent value of a reference sensor of the example embodiment 2.
[Fig. 28] Fig. 28 is an optical microscope photograph of a chip in which a sensor array, a source follower circuit, a decoder and a selector are formed on a single substrate.
[Fig. 29] Fig. 29 is a graph showing a measurement result of light transmittance by analysis example 1.
[Fig. 30] Fig. 30 is a graph showing a measurement result of light transmittance with respect to displacement of a membrane section by analysis example 2.
[Fig. 31] Fig. 31 is a graph showing a result of analysis example 3.

### [Modes for implementing the invention]

For explaining details of the present invention, embodiments of the present invention will be explained below based on the drawings. The embodiments are explained by taking a photodiode as an example of the light receiving element, but no limitation thereto is intended.

### (First embodiment of the invention concerning physical/chemical sensor)

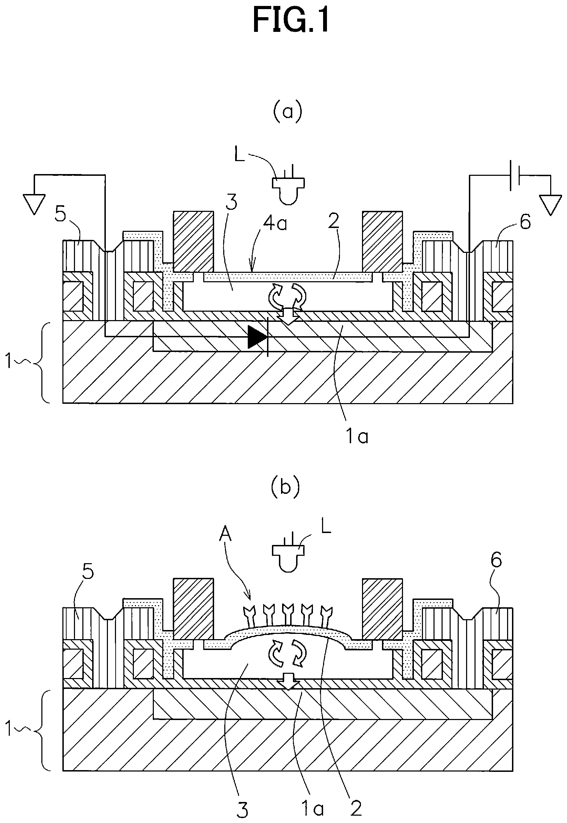

Fig. 1 is a diagram showing a first embodiment of the present invention concerning a physical/chemical sensor. As shown in Fig. 1(a), a membrane section 2 is formed to face an area 1a where a light receiving surface of a photodiode 1 is formed, and an air-gap 3 is formed between the light receiving area 1a and the membrane section 2, whereby a Fabry-Perot resonator is constituted. The membrane section 2 is formed with a material capable of fixing substance (molecule or the like) such that at least an outside surface 4a can fix the substance existing outside the membrane section 2. The membrane section 2 has an opening during a manufacturing process, but the opening is coated and the air-gap 3 is blocked from the circumference. The air-gap 3 is blocked to the degree that the substance (molecule or the like) does not enter the inside of the air-gap 3 easily from the membrane section 2 side. If the blockage is achieved air-tightly, a gas does not flow to the inside of the air-gap 3. Even when the membrane section 2 is constituted by a material capable of fixing the substance (molecule or the like), the substance is not fixed to an inside surface of the membrane section 2. If the blockage is achieved liquid-tightly, a liquid does not flow to the inside of the air-gap 3. A liquid can be used in the case where the fixed substance is removed, for instance. Moreover, the molecule or the like contained in the liquid is not fixed to the inside surface of the membrane section 2. Electrodes 5, 6 are provided to the photodiode 1, and a bias voltage is applied thereto.

In the present embodiment, the membrane section 2 is constituted with a relatively flexible material, so the membrane section 2 can bend mechanically. Therefore, a distance between the light receiving area 1a and the membrane section 2 changes due to the mechanical bending, so the wavelength of the light resonating due to the Fabry-Perot resonator changes. If attention is paid to the light having a specific wavelength, it is understood that the light intensity in the case where the membrane section 2 is not bent differs from the light intensity in the case where the membrane section 2 is bent. By observing the light intensity of specific wavelength, the bending state of the membrane section 2 can be detected. There are parylene-C and parylene-N as flexible materials having the character for fixing substances. These polyxylylene polymers have high light transmittance and low Young's modulus. Therefore, these can be deformed easily with surface stress while forming the Fabry-Perot resonator. The parylene-A has an amino group in the side chain and can fix a molecule such as protein that binds to the amino group. The parylene-AM has a methyl group and an amino group bound in series in the side chain and can fix the molecule that binds with the amino group. The membrane section 2 is not limited to these polyxylylene polymers, but may be selected arbitrarily from materials having light transmittance and flexibility.

It is not required that the material of the membrane sections 2 itself fixes the substance (molecule or the like). Alternatively, a material that has an ability to fix substance (molecule or the like) and that is deposited or the like on entirety or a part of the outside surface 4a of the membrane section 2 may be used. Precious metal (for instance, gold, platinum, palladium or the like) may be deposited in order to adsorb (or bind) substance other than protein to the surface 4a of the membrane section 2. In this case, increase of the Young's modulus of the membrane section 2 and reduction of the transmittance of light can be suppressed by limiting the deposition area of the precious metal to be small.

When the gold or the like is used as the material having the ability to fix the substance (molecule or the like) to the membrane section 2, the membrane section 2 can function also as a half mirror. That is, since the gold or silver has low absorption constant, the membrane section 2 formed by deposition of such the material can improve reflectance of the light inside the air-gap 3. As a result, the half width of the wavelength interfering inside the air-gap 3 can be narrowed.

Since the present embodiment has the above construction, if the substance (molecule or the like) A is fixed to the outside surface of the membrane section 2 as shown in Fig. 1(b), the membrane section 2 bends due to the intermolecular force (drawing shows antibody A as a representative example). Since the membrane section 2 bends in this way, by irradiating light of a specific wavelength toward the light receiving surface of the photodiode from an outside of the membrane section 2, a transmission state of the specific wavelength light can be analyzed electrically. That is, for instance, a red laser beam with wavelength of 600 nm may be irradiated from a light source that generates a laser beam of a single wavelength, and change of the transmittance of the light (or light receiving rate of photodiode) may be observed, whereby the bending state of the membrane section 2 can be estimated. In this way, by grasping whether the membrane section 2 is bent or not, existence of substance (molecule or the like) can be determined, and the fixed quantity of the substance (molecule or the like) can be estimated based on the degree of the bending state of the membrane section 2. The specification of the wavelength of the laser beam should be preferably selected such that the change of the transmittance accompanying the bending of the membrane section 2 becomes remarkable. It is because the respective sizes of the thickness of the membrane section 2 and the gap of the air-gap 3 forming the Fabry-Perot resonator vary and the transmittance of the light of the specific wavelength in the bent state of the membrane section 2 varies.

If a material such as palladium that adsorbs a hydrogen molecule is deposited on the surface 4a of the membrane section 2, the sensor functions as a hydrogen gas sensor. If the membrane section 2 is constituted with the parylene-A or the like, the sensor functions as a protein sensor. If the precious metal such as gold is deposited, a gas such as carbon dioxide or nitrogen dioxide, which can affect the environment, or a gas such as TNT or RDX contained in explosives can be detected.

### (Second embodiment of the invention concerning physical/chemical sensor)

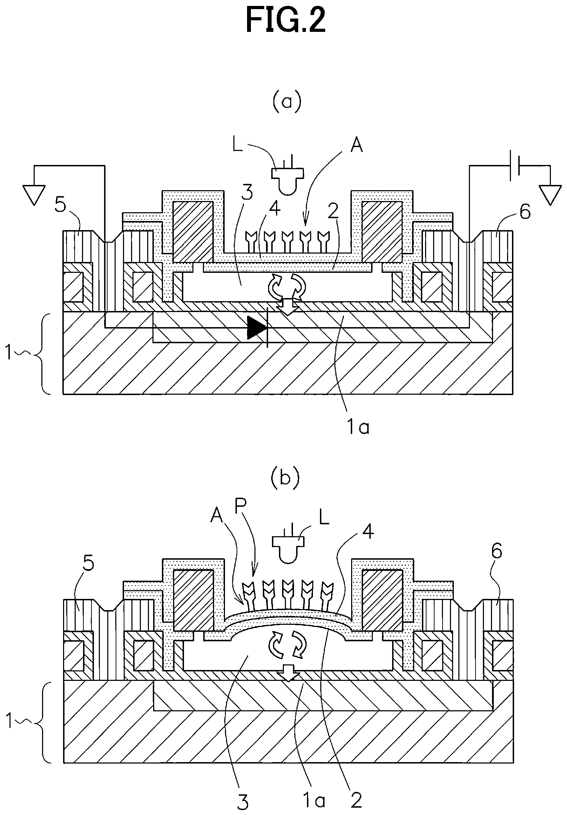

Next, a second embodiment of a physical-chemical sensor will be explained. Fig. 2 is a diagram showing the second embodiment. As shown in Fig. 2(a), also in the present embodiment, as in the first embodiment, the membrane section 2 is formed on the light receiving surface 1a of the photodiode 1 to face the photodiode 1 and the air-gap 3 is formed therebetween, thereby constituting the Fabry-Perot resonator. In the present embodiment, a molecule fixation membrane 4 is deposited on the surface of the membrane section 2. Therefore, the membrane section 2 and the molecule fixation membrane 4 can be formed with different materials. For instance, the membrane section 2 may be formed with the parylene-N or the parylene-C. These kinds of polyxylylene polymer have high light transmittance and low Young's modulus. Therefore, the membrane section 2 can be deformed easily with surface stress while forming the Fabry-Perot resonator.

As the molecule fixation membrane 4, a desired molecule can be fixed by depositing various kinds of materials. Therefore, when the hydrogen gas is detected, the molecule fixation membrane 4 is formed with the material that can fix the hydrogen molecule. Thus, the sensor can function as a hydrogen sensor. When the Young's modulus of the material used for the molecule fixation membrane 4 is high, increase of the Young's modulus of the entirety including the membrane section 2 can be suppressed by thinning the molecule fixation membrane 4.

If the molecule fixation membrane 4 uses gold or the like, the molecule fixation membrane 4 can function also as a half mirror. That is, by using the material having relatively low Young's modulus for the membrane section 2, even if the material having relatively high Young's modulus is used for the molecule fixation membrane 4, the deposited body of the membrane section 2 and the molecule fixation membrane 4 can cause change due to the surface stress. Moreover, since the gold has low absorption constant, the reflectance of the light inside the air-gap 3 can be improved. In this case, by adjusting the film thickness of the molecule fixation membrane 4 deposited on the membrane section 2, the degrees of the deformation of the membrane section 2 due to the surface stress, the transmittance of the entering light and the reflectance in the air-gap 3 can be adjusted.

Furthermore, if the molecule fixation membrane 4 is constituted with the material that can fix a biopolymer (for instance, protein such as an antibody, DNA or the like), the molecule fixation membrane 4 can be made as a biopolymer fixation membrane. Specifically, when the molecule fixation membrane 4 is constituted with the material capable of fixing an antibody, the molecule fixation membrane 4 can be made as an antibody fixation membrane. The parylene-A or the parylene-AM can be used as the antibody fixation membrane 4. Since the parylene-A and parylene-AM have an amino group in a side chain, the antibody A that can electrically bind to the amino group can be fixed. The present embodiment does not aim to detect the fixed state of the antibody A but aims to detect the special protein that causes specific adsorption to the antibody A. That is, the bending state of the membrane section 2 in the state where the antibody A is fixed beforehand is used as a reference (although diagram shows state where membrane section 2 is not bent), and thereafter it is detected whether the specific protein that causes specific adsorption to the antibody exists or not. There are comparatively many antibodies A that can electrically bind to the amino group, and such antibodies A can be used for determining existence or non-existence of the protein that causes the specific adsorption to these antibodies A. Therefore, the antibody fixation membrane 4 is not limited to the parylene-A or the parylene-AM. Rather, any other material (thin film of precious metal or the like) having the character capable of fixing the antibody A can be used.

By fixing the antibody A to the antibody fixation membrane 4 constituted with such the material, specific adsorption of the specific protein (antigen) P to the antibody A can be caused as shown in Fig. 2(b). The intermolecular force changes due to the specific adsorption of the antigen P to the antibody A, and the membrane section 2 can be bent mechanically. Since the antibody A is also a kind of protein, it is anticipated that slight bending is caused by the intermolecular force when the antibody A is fixed as compared to the state where the antibody A is not fixed. However, due to the specific adsorption of the specific protein (antigen) P to the antibody A, the intermolecular force acts strongly, and the bending of the membrane section 2 becomes remarkable. Accordingly, the existence or non-existence of the specific adsorption of the specific protein (antigen) P can be determined by the comparison with the light intensity (bending state of membrane section 2) in the state where the antibody A is fixed.

Since the present embodiment has the above construction, by irradiating the light with the specific wavelength (for instance, red light with wavelength of 600 nm) toward the light receiving surface of the photodiode using the light source L as in the first embodiment, the transmission state of the specific wavelength light can be analyzed electrically. The bending state of the membrane section 2 can be grasped by observing the change of the transmittance of the light. It can be determined whether the specific protein P is bound to the antibody A fixed to the surface of the antibody fixation membrane 4 based on the bending state at that time.

By constituting the membrane section 2 with the parylene having the small Young's modulus, the membrane section 2 can be bent with slight change of the surface stresses, and even small quantity of the specific protein can be detected.

If the small quantity of the specific protein can be detected in this way, for instance, when existence of unique protein (antigen), which is possessed only by a cancer patient, is inspected from a body fluid such as human blood, small quantity of the unique protein can be detected, contributing to early diagnosis. The air-gap 3 of the above construction is blocked from the circumference liquid-tightly such that the inspection liquid or the cleaning liquid does not enter, so the function as the Fabry-Perot resonator is not affected during the use and after the use.

### (Embodiment of physical/chemistry sensor array)

In the above, a single body of the physical/chemical sensor is explained. In addition, multiple photodiodes 1 may be formed on the same substrate, and the membrane section 2 may be formed for each of the photodiodes 1 while forming the air-gap 3, whereby a sensor array having the multiple sensors may be provided. Next, an embodiment of the sensor array will be illustrated.

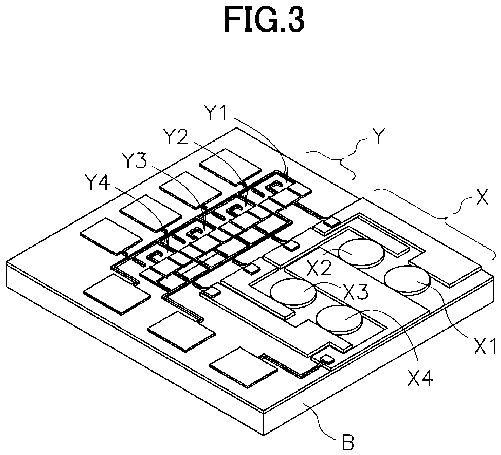

Fig. 3 is a diagram illustrating an example of a sensor array. X shows a sensor area and Y shows a processing circuit area. In the present embodiment, four physical/chemical sensors X1, X2, X3, X4 are formed on the single (the same) semiconductor substrate B. The above first or second embodiment of the present invention concerning the physical/chemical sensor is used as each of the sensors X1-X4. Signal processing circuits Y1, Y2, Y3, Y4 are formed on the substrate B to be connected to the sensors X1-X4 respectively for processing (detecting) detection values of the sensors X1-X4. For instance, each of the processing circuits Y1-Y4 is based on MOSFET, and each of the sensors X1-X4 is connected to a gate electrode of MOSFET, thereby detecting generation of a photocurrent. If n-type substrate is used for the semiconductor substrate B, n-type photodiode can be formed as the photodiode as the light receiving element, and n-type MOSFET can be simultaneously formed on the same substrate B.

With such the construction, existence of the substances of different kinds can be detected at the same time. For instance, when the antibody is fixed to the membrane section of the sensor to inspect the existence of the antigen that causes specific adsorption to the antibody as mentioned above, antibodies of different kinds may be fixed to the membrane sections 2 beforehand individually, whereby multiple antigens that cause the specific adsorption to the antibodies can be found at once. Such the construction is useful in a medical site because the inspection time can be shortened and the time number of extraction of body fluid can be reduced.

### (First embodiment of the invention concerning physical/chemical phenomenon sensing device)

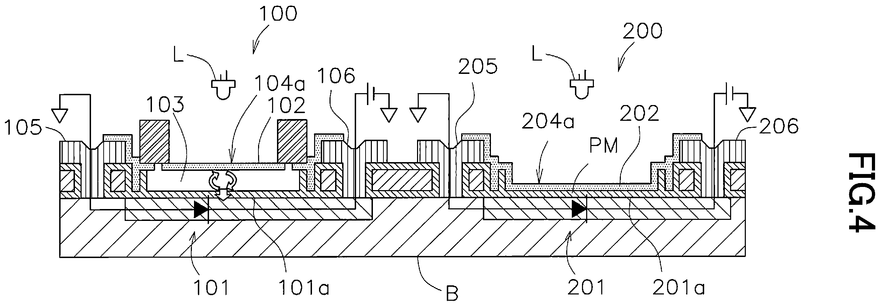

Next, an embodiment of the present invention concerning the physical/chemical phenomenon sensing device will be explained. The physical/chemical phenomenon sensing device uses the above physical/chemical sensor. The physical/chemical phenomenon sensing device consists of the above physical/chemical sensor (detection sensor) constituting the Fabry-Perot resonator and a reference sensor that does not constitute the Fabry-Perot resonator. Fig. 4 is a diagram showing the first embodiment. As shown in Fig. 4, according to the present embodiment, the detection sensor 100 and the reference sensor 200 are produced on the same substrate B. Like the above-mentioned first embodiment, in the detection sensor 100, the membrane section 102 is provided to the light receiving area 101a of the photodiode 101 while forming the air-gap 103, thereby constituting the Fabry-Perot resonator. The reference sensor 200 is formed such that the membrane section 202 is deposited on the light receiving area 201a of the photodiode 201 without forming the air-gap therebetween. The membrane section 202 formed in the reference sensor 200 is constituted by the material of the same kind as the detection sensor 100 and can specifically fix a substance on the outside surface 204a of the membrane section 202 of the reference sensor 200 like the membrane section 102 of the detection sensor 100. PM in the drawing denotes a protection film for protecting the photodiode from the etching gas used when forming the air-gap 103 in the detection sensor 100. The protection film is normally formed by thermal oxidation (refer to embodiment concerning following manufacturing method).

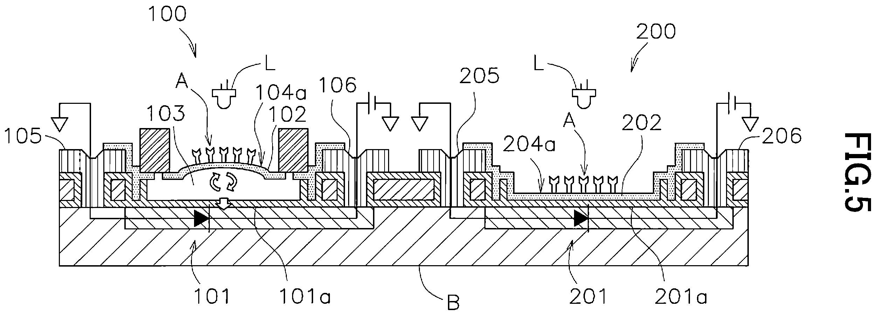

Therefore, when the specific substance (molecule or the like) A is fixed to the detection sensor 100 and the reference sensor 200 of the above-mentioned construction as shown in Fig. 5, the membrane section 102 bends due to the intermolecular force and the air-gap 103 changes in the detection sensor 100 as mentioned above. As contrasted thereto, since the reference sensor 200 does not have the air-gap, no such change occurs in the reference sensor 200. Even if stress acts to bend the membrane section 202, the membrane section 202 cannot bend easily because the air-gap is not formed. As a result, the transmission characteristic of the light does not change.

Other than the parylene-A and the parylene-AM having the molecule fixation ability, precious metal may be deposited on the membrane sections 102, 202. Electrodes 105, 106, 205, 206 are formed in both sensors 100, 200 to be able to electrically analyze the light receiving rates of the photodiodes 101, 201. The same light source is used for the irradiation of the light to both the sensors 100, 200 and the transmittances of the lights of the same wavelength can be compared. The light sources L in the drawing are depicted such that the individual light source L is used for each of both the sensors 100, 200. This means that the light is irradiated to the sensors 100, 200 respectively. The lights of the same wavelength and the same quantity may be irradiated using the different light sources as illustrated. Alternatively, the same light may be irradiated using the single light source.

Since the present embodiment has the above construction, the reference sensor 200 constituting the present embodiment can detect the transmittance of the light irradiated from the light source L. However, even when a specific substance fixes to the surface of the membrane section 202, the membrane section 202 does not bend and the transmittance of the light does not change due to the fixation of the substance. When the gas or the liquid supplied for the detection of the substance is opaque or has pigment, the transmittance of the light decreases according to the degree of the translucency of the supplied gas or the supplied liquid. Therefore, the same gas or the same liquid may be supplied to both of the detection sensor 100 and the reference sensor 200, and change of the transmittance of the light at that time may be sensed. Thus, it can be determined whether the reduction of the light transmittance sensed by the detection sensor 100 is due to the fixation of the specific substance or due to the translucency of the supplied gas or liquid. Furthermore, by sensing the degree of the reduction of the transmittance, the degree of the bending of the membrane section 102 due to the actual fixation of the substance can be calculated. Accordingly, the amount of the reduction of the transmittance of the light in the detection sensor 100 and the amount of reduction of the transmittance of the light in the reference sensor 200 may be compared, and the difference therebtween may be used as the existing amount of the substance, whereby the existence of the substance can be detected.

### (Second embodiment of the invention concerning physical/chemical phenomenon sensing device)

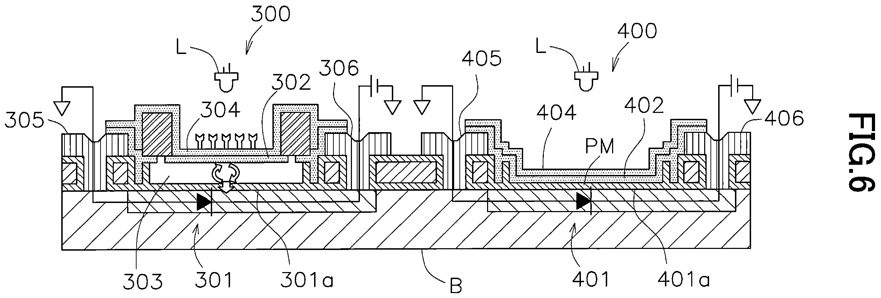

Next, a second embodiment of a physical/chemical phenomenon sensing device will be explained. Fig. 6 is a drawing illustrating the present embodiment. As shown in the drawing, according to the present embodiment, the detection sensor 300 is constructed such that the molecule fixation membrane 304 is deposited on the surface of the membrane section 302 like the second embodiment concerning the physical/chemical sensor (refer to Fig. 2). The molecule fixation membrane 404 is deposited on the surface of the membrane section 402 also in the reference sensor 400. In this way, by deposition of the molecule fixation membranes 304, 404 on the surfaces of the membrane sections 302, 402 and by suitably selecting the material of the molecule fixation membranes 304, 404, the detection sensor 300 can be constituted as a sensor for detecting hydrogen, a biopolymer, an antibody or the like. Since the reference sensor 400 has the similar construction, the existence or non-existence and the degree of the change due to the fixation of the substance in the change of the light transmittance detected with the detection sensor 300 can be detected.

With such the construction, for instance, unique protein (antigen) contained in the liquid that can cause the reduction of the light transmittance such as a human body fluid or blood can be detected. That is, the antibody may be fixed to both of the molecule fixation membranes 304,404 of the detection sensor 300 and the reference sensor 400, and the human body fluid, the blood or the like may be supplied to the both, whereby the transmittance of the light in both the sensors 300, 400 changes. Even in that case, if the antigen that causes specific adsorption to the antibody exists, the change of the transmittance of the light detected by the detection sensor 300 becomes larger than the change of the transmittance of the light detected by the reference sensor 400. Therefore, the existence and the degree of the antigen can be detected by comparing them.

In both of the above-mentioned embodiments, the light receiving surfaces 201a, 401a of the reference sensors 200, 400 may be exposed. That is, in the first embodiment (Fig. 4) and the second embodiment (Fig. 6) of the present invention concerning the physical/chemical phenomenon sensing device, the protection films PM are formed on the light receiving surfaces 201a, 401a of the reference sensors 200, 400, and furthermore the membrane sections 202, 402 and the molecule fixation membrane 404 (only in second embodiment) are deposited on the surfaces of the protection films PM. Alternatively, they may be removed by etching process or the like.

### (Modification of embodiment concerning physical/chemical phenomenon sensing device)

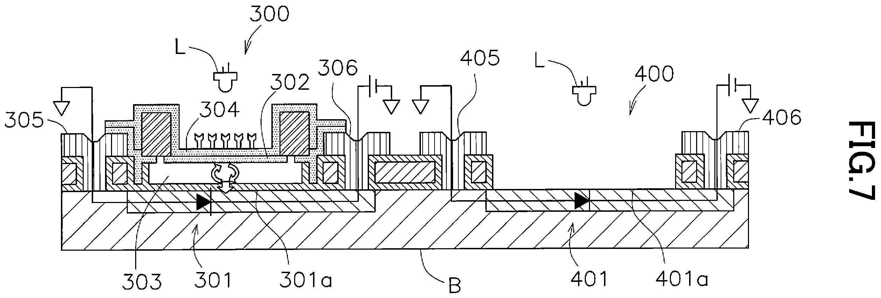

Fig. 7 shows a construction provided by removing the protection film PM, the membrane section 402 and the molecule fixation membrane 404, which are deposited on the light receiving surface 401a of the reference sensor 400 in the second embodiment (Fig. 6). As shown in the drawing, there is nothing, which interrupts the light irradiated from the light source L, on the light receiving surface 401a of the reference sensor 400, so the light receiving surface 401a can fully receive the light. When the same gas or liquid as that supplied to the detection sensor 300 is supplied to the reference sensor 400, the reference sensor 400 receives the light without causing reduction of the light quantity if the liquid or the like is transparent. As contrasted thereto, if the liquid or the like is opaque or is colored, the received light quantity reduces and the change can be detected notably. Although not shown in the drawing, this is also the same in the case where the protection film PM and the membrane section 202 of the first embodiment (Fig. 4) are removed.

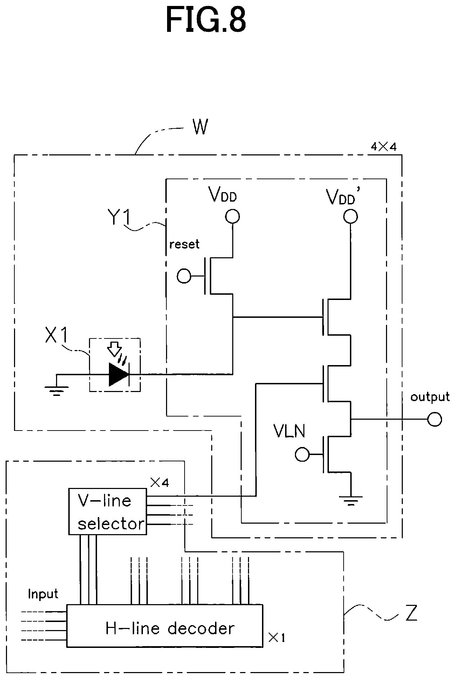

Fig. 8 is an electric block diagram showing another modification of a physical/chemical phenomenon sensing device. X in Fig. 8 shows a sensor (detection sensor or reference sensor), Y shows a signal processing circuit and Z shows a selection circuit. A total of sixteen sensors X (X1, ..., X16) consisting of four-by-four sensors in the transverse direction and the longitudinal direction are formed on the same substrate, and, also a total of sixteen processing circuits Y (Y1, ..., Y16) individually connected to the sensors X are formed. The selection circuit Z consists of a decoder and a selector. The decoder selects a H line (in transverse direction) on the substrate. The selector selects a V line (in longitudinal direction) on the substrate. A sensor (for instance, X1) is selected from the sixteen sensors X and an input signal (voltage) is input into the selected sensor by the decoder and the selector. Thus, the photocurrent value in each sensor X is sensed.

A source follower circuit based on MOSFET is formed in each processing circuit Y connected to each sensor X. The current outputted from the sensor X is inputted into a gate electrode. Thus, generation of a photocurrent is detected, and the output value is obtained as a voltage. By sensing the output value with an oscilloscope or the like, the volume of the photocurrent can be sensed.

In this way, by arraying the multiple sensors X, different substances (molecules) can be detected simultaneously. By arranging the detection sensors and the reference sensors in either or both of the H line (transverse direction) and the V line (longitudinal direction), the change of the photocurrent by the detection sensors and the change of the photocurrent by the reference sensors can be sensed simultaneously. In this case, about the substance such as the blood that can reduce the light transmittance, the change of the light transmittance due to the adsorption of the specific substance (molecule) can be detected more clearly by the above-mentioned comparison.

### (First embodiment of the invention concerning manufacturing method of physical/chemical sensor)

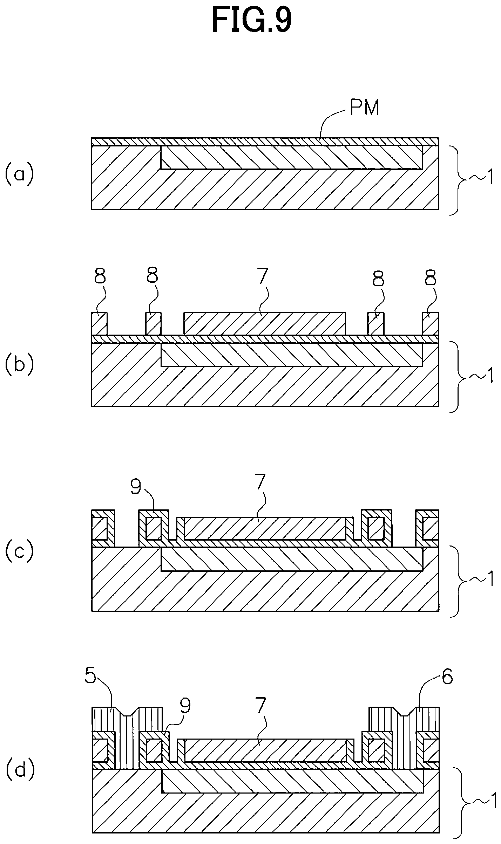

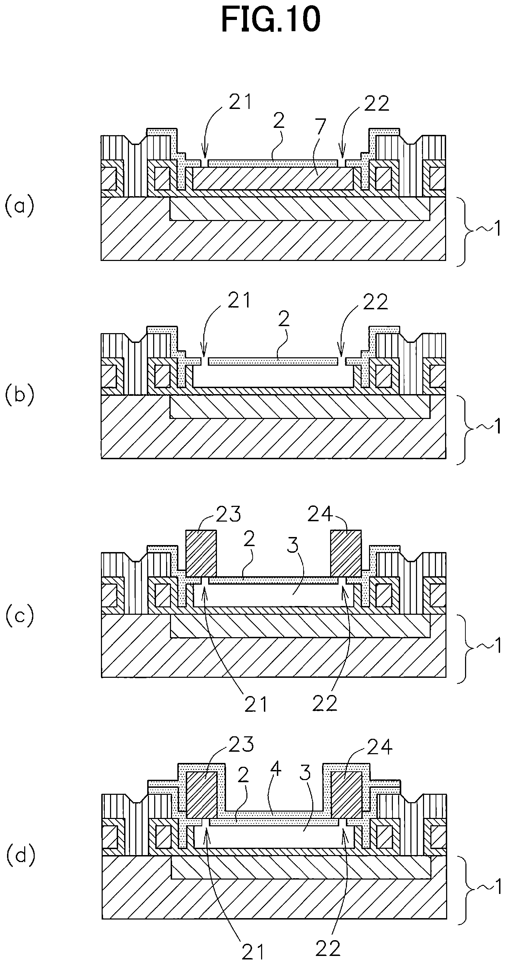

Next, a manufacturing method of the above-mentioned physical/chemical sensor will be explained. Fig. 9 and Fig. 10 are drawings showing the first embodiment concerning the manufacturing method. First, the photodiode 1 is manufactured by a predetermined semiconductor process. A silicon dioxide film is formed on the surface of the photodiode 1 for protection. This silicon dioxide film may remain as it is or may be removed by etching process. Then, a protection film PM is formed on the surface of the photodiode 1 (Fig. 9(a)). The protection film PM is formed as a silicon dioxide film by thermal oxidation. The protection film PM is formed to be thicker than the silicon dioxide film formed in the above-mentioned semiconductor process. Therefore, the protection film PM may be deposited on the silicon dioxide film formed by the semiconductor process, or the silicon dioxide film may be removed and then a silicon dioxide film of a predetermined thickness may be formed. The protection film PM protects the photodiode 1 from the etching gas in a subsequent sacrificial layer removing step.

From this state, as a first step, a step (sacrificial layer forming step) for forming the sacrificial layer 7 on the light receiving surface (light receiving area) 1a of the photodiode 1 is performed. The material used for the sacrificial layer 7 is a material that can be etched and removed in a later step. For instance, polysilicon is used. When using the polysilicon, the polysilicon is deposited on the entire surface of the silicon dioxide film by a CVD (Chemical Vapor Deposition) method, and patterning is performed with photolithography technique. The polysilicon in a necessary area is left and the other polysilicon is removed (refer to Fig. 9(b)). At that time, multiple deposition of sections 8 are formed in a circumference of the sacrificial layer 7 in addition to the sacrificial layer 7, and a suitable gap is formed between the sacrificial layer 7 and the deposition of section 8 provided near the sacrificial layer 7. The gap is constructed such that a membrane section constituent material can be deposited in the gap while a membrane section is formed in a subsequent membrane section forming step. Thus, the membrane section constituent material deposited in the gap and the formed membrane section are formed integrally.

Then, a silicon dioxide film 9 is deposited on an area excluding the surface section of the sacrificial layer 7 (protection layer forming step). The silicon dioxide film 9 functions as a protection layer for protection from the etching gas during etching in a subsequent step. Since the silicon dioxide film is deposited on the entire area excluding the surface of the sacrificial layer 7, the silicon dioxide film adheres also to the periphery (side surface) of the sacrificial layer 7 (Fig. 9(c)). At that time, in order to provide the electrodes 5, 6 to the p type region and n+ type region constituting the photodiode 1, it is also possible to etch and remove the silicon dioxide film on the corresponding portions by buffered hydrofluoric acid or the like and to provide aluminum wiring on the same portions (Fig. 9(d)).

Then, the membrane section constituent material is deposited on the entire surface of the sacrificial layer 7 except for a part thereof and the silicon dioxide film on the periphery of the sacrificial layer 7 (membrane section forming step). The parylene-A or the parylene-AM can be used as the membrane section constituent material. In this case, after the parylene is deposited on the entire surface by a vapor-deposition method, a predetermined area is left and the parylene on a part (through areas for etching 21, 22) is removed. Also in this removal of the parylene, after patterning by oxygen plasma, unnecessary parylene is removed by photolithography technique (Fig. 10(a)). In the above vapor-deposition of the parylene, quantity of raw-material dimer is adjusted in order to adjust the thickness. By adjusting the quantity of the raw-material dimer, monomer gas supply quantity of polyparaxylylene can be controlled and the thickness at the time when a polymer membrane is formed after polymerization can be adjusted. By this step, the membrane section 2 having appropriate thickness is formed on the surface of the sacrificial layer 7.

Then, the sacrificial layer 7 is removed from the surface of the membrane section 2 by etching process (sacrificial layer removing step). At this time, there is formed a portion where the parylene is not vapor-deposited on a part of the sacrificial layer 7 (through areas for etching 21, 22) as mentioned above. Therefore, the sacrificial layer 7 is removed through the portion (Fig. 10(b)). The above-mentioned etching of the sacrificial layer 7 is performed by applying the etching gas to the sacrificial layer 7 by dry etching.

Further, the through areas for etching 21, 22 are coated (through area for etching sealing step). In this step, film resist lamination is used to laminate the through areas for etching. In order to limit the laminated portions to the through areas for etching, an unnecessary portion is removed by photolithography technique after the lamination (Fig. 10(c)). In this way, by coating the through areas for etching, the portion of the sacrificial layer 7 removed by the etching in the previous step is sealed (i.e., hermetically sealed air-tightly or liquid-tightly according to the degree of sealing).

By the above steps, the physical/chemical sensor can be constituted. It is because, as mentioned above, the parylene-A or the parylene-AM is used in the membrane section forming step and therefore the constituted membrane section 2 has optical transparency and flexibility and has a molecule fixation ability on its surface.

Subsequently to the above steps, a molecule fixation material may be deposited on the surface of the membrane section 2 (molecule fixation membrane forming step). For instance, if the membrane section 2 is formed with a material having no molecule fixation ability (for instance, parylene-N or parylene-C) in the membrane section forming step, a material having a molecule fixation ability (for instance, parylene-A or parylene-AM) is deposited on the surface (Fig. 10(d)). At that time, a biopolymer fixation membrane can be formed by deposition of a biopolymer fixation material as the molecule fixation material (biopolymer fixation membrane forming step). Specifically, an antibody fixation membrane can be formed by deposition of an antibody fixation material (antibody fixation membrane forming step). In the present embodiment, the parylene-AM having the amino group in the side chain is vapor-deposited and deposited on the surface of the membrane section 2. Thus, a construction in which the antibody fixation membrane 4 is deposited on the surface of the membrane section 2 can be provided (Fig. 10(d)). The molecule fixation membrane (antibody fixation membrane) 4 may be vapor-deposited on not only the surface of the membrane section 2 but also on a circumference of the membrane section 2 widely. Specifically, by including the coating portions 23, 24 coating the through areas for etching 21, 22, no slight gap is left between the through areas for etching 21, 22 and the coating portions 23, 24. Thus, the air-tightness or the liquid-tightness of the air-gap 3 can be improved if needed.

### (Second and third embodiments of the invention concerning manufacturing method of physical/chemical sensor)

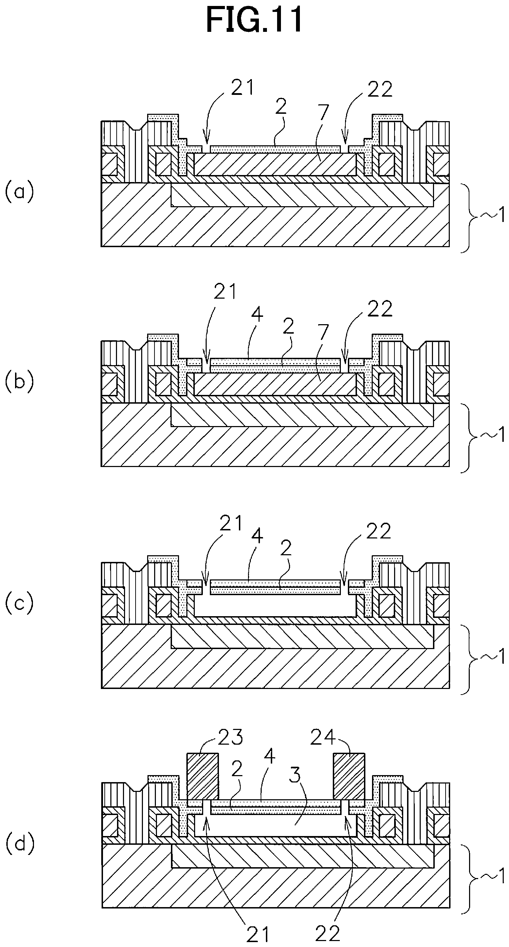

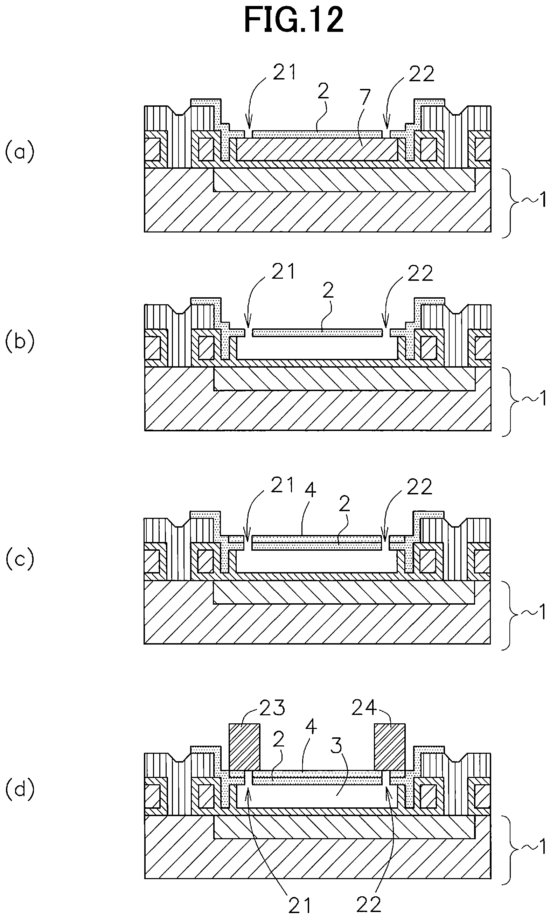

In the above first embodiment concerning the manufacturing method of the physical/chemical sensor, the molecule fixation membrane forming step is the final step. Alternatively, the molecule fixation membrane forming step may be performed during the sensor manufacturing process instead of performing the molecule fixation membrane forming step as the final step. That is, as shown in Fig. 11, the second embodiment concerning the manufacturing method deposits the molecule fixation material (Fig. 11(b)) after the end of the membrane section forming step (Fig. 11(a)). Also in this case, the sacrificial layer is etched in a subsequent step (Fig. 11(c)). Therefore, in the molecule fixation membrane 4, the molecule fixation membrane in the through areas for etching 21, 22 has been removed. Finally, the through areas for etching 21, 22 in the membrane section 2 and the molecule fixation membrane 4 are coated (Fig. 11(d)). As shown in Fig. 12, the third embodiment deposits the molecule fixation layer 4 (Fig. 12(c)) after the sacrificial layer removing step (Fig. 12(b)). In this case, it seems that the molecule fixation material deposits inside the air-gap 3. However, when the sacrificial layer is formed to be small or when the molecule fixation membrane 4 is a thin film, the molecule fixation membrane 4 can be deposited on the surface of the membrane section 2 without affecting the function as the Fabry-Perot resonator.

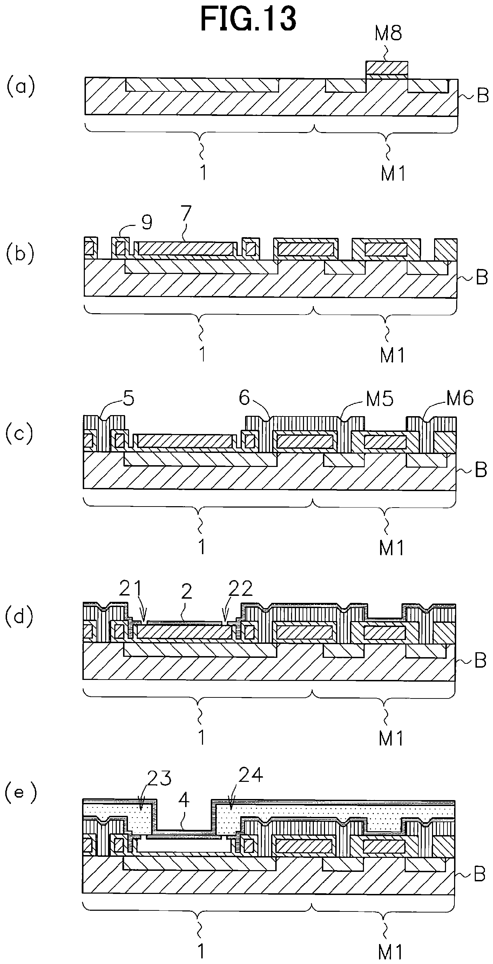

When the physical/chemistry sensor array is manufactured, the physical/chemical sensors can be arrayed by performing a plurality of each of the above-mentioned steps simultaneously. Furthermore, the processing circuit can be formed simultaneously. Fig. 13 shows an example of manufacturing the physical/chemical sensor and the processing circuit simultaneously. The drawing omits a part of the sensor manufacturing process. As shown in Fig. 13, an area 1 for forming a photodiode and an area M1 for forming MOSFET are segmented on a substrate B. Impurity is beforehand doped into a source region S and a drain region D in the area M1 for forming the MOSFET. For instance, when a p type silicon substrate is used for the semiconductor substrate B, n+ is doped into the source region and the drain region to produce n type MOSFET. Therefore, polysilicon M8 is first deposited on a gate region beforehand as an electrode (refer to Fig. 13(a)).

Then, the sacrificial layer 7 is deposited on the area 1 of the photodiode, and the silicon dioxide film 9 is deposited as a protection layer (refer to Fig. 13(b)). Further, when the electrodes 5, 6 are formed on the photodiode side, the electrodes M5, M6 are also formed on the MOSFET side (refer to Fig. 13(c)). By forming the electrode 6 in the n+ type region of the photodiode and the electrode M5 of the MOSFET continuously, the both electrodes can be formed such that they are connected with each other.

Subsequently to the above, a membrane section constituent material such as the parylene-C is deposited on the entire surface of the sacrificial layer 7 and the surrounding silicon dioxide film 9 except for a part of the sacrificial layer 7 (i.e., through areas for etching 21, 22), thereby forming the membrane section 2 (refer to Fig. 13(d)). Then, after the sacrificial layer 7 is removed by the etching process, the through areas for etching 21, 22 are sealed. Further, a molecule fixation material is deposited to laminate the molecule fixation membrane 4 (refer to Fig. 13(e)). With the above construction, the physical/chemical sensor and the MOSFET can be manufactured on the single substrate simultaneously. If the membrane section 2 has the molecule fixation ability, deposition of the molecule fixation membrane 4 can be omitted as explained above.

The embodiments of the manufacturing method of the physical-chemical sensor are as above. Therefore, the membrane section 2 can be formed while forming the air-gap 3 on the surface of the photodiode 1. Since the membrane section 2 is formed by vapor-depositing the parylene, the membrane section 2 has high light transmittance and flexibility. Also in the case of the construction in which the molecule fixation membrane (antibody fixation membrane) 4 is deposited, the construction can have light transmittance and flexibility by using the parylene-A or the parylene-AM. Moreover, also when a precious metal such as gold is deposited, the light transmittance can be ensured and the flexibility of the membrane section can be maintained by forming the metal film as a thin film.

### (Embodiment of the invention concerning manufacturing method of physical/chemical phenomenon sensing device)

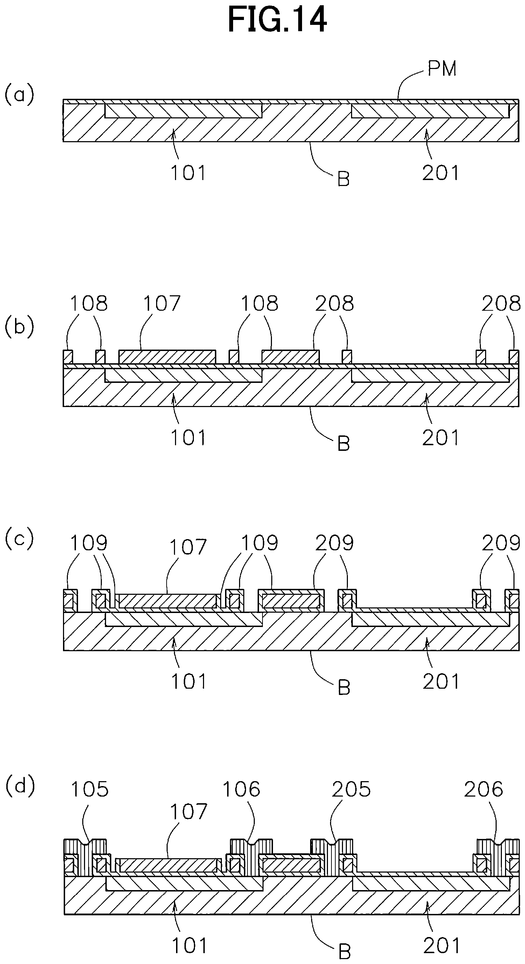

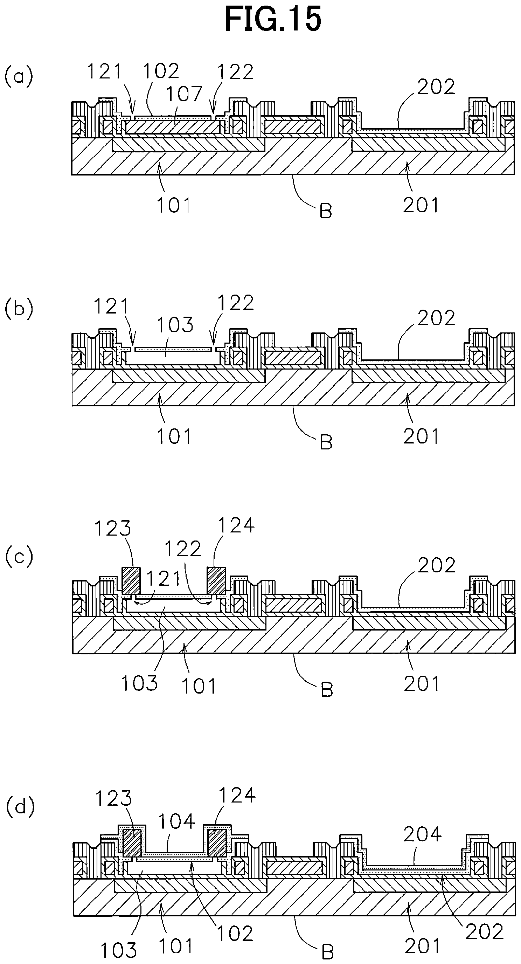

Next, a manufacturing method of a physical/chemical phenomenon sensing device will be explained. Figs. 14 and 15 are diagrams showing an embodiment of a manufacturing method of a sensing device. As shown in these drawings, the fundamental process of the manufacturing method is the same as that of the first embodiment concerning the manufacturing method of the physical/chemical sensor. The method manufactures the sensing device by manufacturing the reference sensor simultaneously with the manufacturing of the physical/chemical sensor.

That is, multiple photodiodes (for instance, two photodiodes) 101, 201 are formed on the single substrate B (Fig. 14(a)) and classified into the photodiode for the detection sensor and the photodiode for the reference sensor. Thus, two kinds of sensors of the detection sensor using the photodiode 101 for the detection sensor and the reference sensor using the photodiode 201 for the reference sensor are manufactured on the same substrate B. The detection sensor is manufactured by the above-mentioned process of manufacturing the physical/chemical sensor. Generally, the detection sensor is processed by the steps including the step for forming the protection film on the surface of the photodiode 101 (Fig. 14(a)), the subsequent sacrificial layer forming step (Fig. 14(b)), the protection layer forming step (Fig. 14(c)), the membrane section forming step (Fig. 15(a)), the sacrificial layer removing step (Fig. 15(b)), and the through area for etching sealing step (Fig. 15(c)).

Next, a manufacturing method of the reference sensor will be explained along with the above-mentioned steps. First, a protection film PM is provided by forming a silicon dioxide film on the surface of the photodiodes 101, 201 manufactured by the semiconductor process (Fig. 14(a)). The protection film PM is for protecting the photodiode 101 from the etching gas in the subsequent sacrificial layer removing step. The sacrificial layer forming step forms the sacrificial layer 107 only on the light receiving surface of the photodiode 101 for the detection sensor. The sacrificial layer is not formed on the light receiving surface of the photodiode 201 for the reference sensor (Fig. 14(b)). Polysilicon is used for the sacrificial layer 107. A step of depositing the polysilicon on the entire surface and then removing the polysilicon on the unnecessary area is the same as the step explained above. Multiple deposition sections 108, 208 are formed at the same time as the formation of the sacrificial layer. The deposition section 108 provided near the sacrificial layer 107 is formed such that a gap, in which the membrane section constituent material can deposit, is provided between the deposition section 108 and the sacrificial layer 107.

In the protection layer forming step, the protection layers 109, 209 are formed by deposition of the silicon dioxide film on the area excluding the surface of the sacrificial layer 107 formed in the sacrificial layer forming step and the light receiving surface of the photodiode 201 for the reference sensor (Fig. 14(c)). The silicon dioxide film is not deposited on the light receiving surface of the photodiode 201 for the reference sensor. Thus, thickness conditions of the deposited on both sensors are equalized except the air-gap formed after removing the sacrificial layer 207 of the photodiode 101 for the detection sensor in the subsequent step. After the protection layer forming step, the electrodes 105, 106, 205, 206 are provided to electrode formation areas (Fig. 14(d)). When the electrodes are provided, the silicon dioxide film on the electrode formation areas is removed by etching process, and aluminum wiring is prepared.

In the membrane section forming step, the membrane section constituent material is deposited on the entirety except for portions 121, 122 of the sacrificial layer 107 formed on the light receiving surface of the photodiode 101 for the detection sensor, thereby forming the membrane sections 102, 202 (Fig. 15(a)). The portions where the membrane section constituent material is not deposit are to function as the through areas for etching and are formed by removing the membrane section constituent material after depositing it. The parylene-A or the parylene-AM can be used as the membrane section constituent material and can be deposited by a vapor-deposition method. As mentioned above, in the vapor-deposition, the quantity of the raw-material dimer is adjusted to form the membrane section with arbitrary thickness. The same source gas is simultaneously supplied to both of the photodiode 101 for the detection sensor and the photodiode 201 for the reference sensor. Thus, the, thickness of the polymer membrane formed after aggregation can be equalized between them. The sensor for reference is completed by this step, and the sensor for detection will be manufactured by the remaining steps.

The sacrificial layer removing step is a step for applying the etching gas to the sacrificial layer 107 through the through areas for etching 121,122 to remove the sacrificial layer 107 (Fig. 15(b)). Thus, the air-gap 103 is formed between the light receiving surface of the photodiode 101 for the detection sensor and the membrane section 102. The through area for etching sealing step forms the coating sections 123, 124 by applying film resist lamination to the through areas for etching 121, 122 (Fig. 15(c)). Thus, the sensor for detection can be completed.

As above, the sensing device is manufactured by manufacturing the sensor for detection and the sensor for reference simultaneously on the same substrate B. In the case where the molecule fixation membranes 104, 204 are deposited on the surfaces of the membrane sections 102, 202, a step (molecule fixation membrane forming step) of further deposition of a material, which has a molecule fixation ability, on the surface of the sensing device completed as above may be performed (Fig. 15(d)). At that time, in order to equalize the conditions of the sensor for detection and the sensor for reference, the material having the molecule fixation ability is deposited simultaneously on the both membrane sections 102, 202. When vapor-deposition of the parylene-A or the parylene-AM as the material having the molecule fixation ability is performed, the same raw-material gas is supplied simultaneously to the both membrane sections 102, 202, whereby the thicknesses of the molecule fixation membranes 104, 204 can be formed to be similar to each other.

### (Modification of embodiment concerning manufacturing method of physical/chemical phenomenon sensing device)

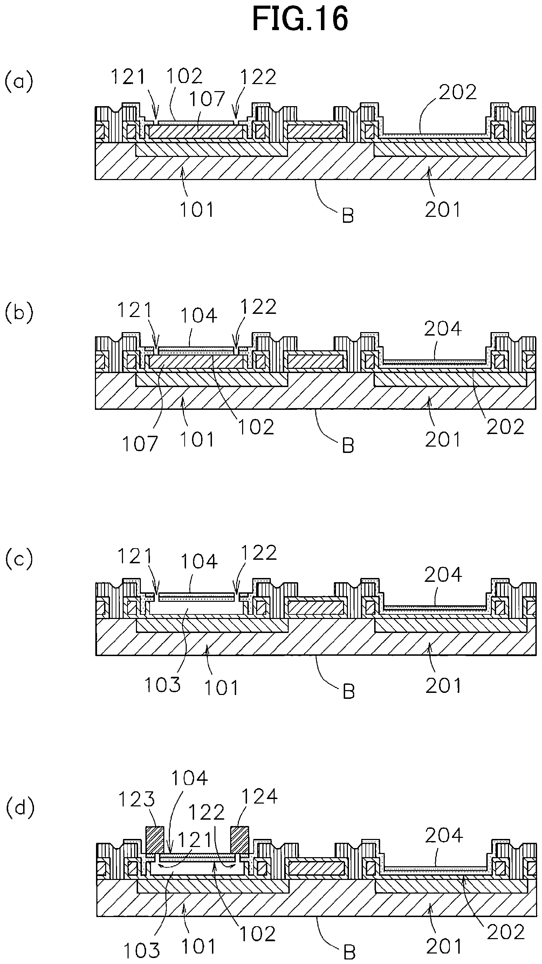

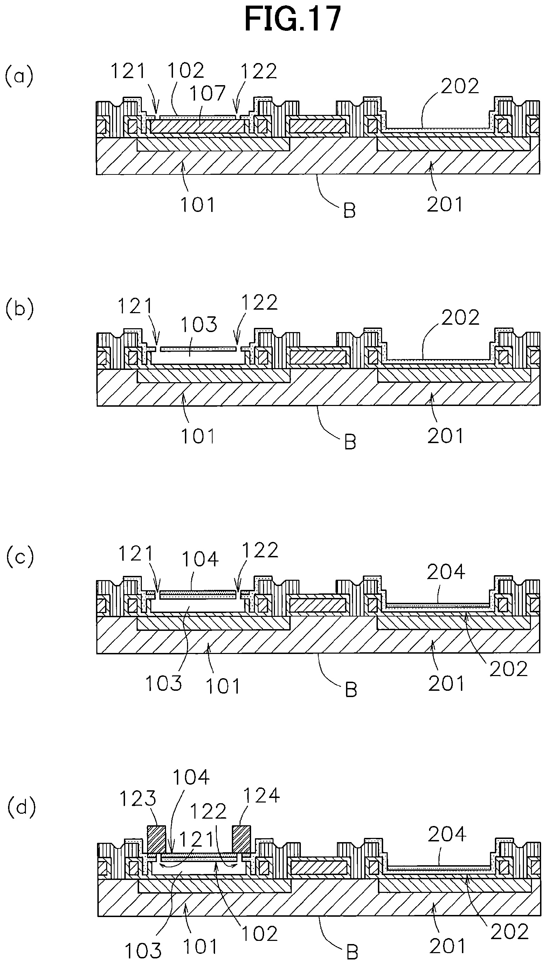

Also in the manufacturing method of the physical/chemical phenomenon sensing device, the molecule fixation membrane forming step may not be necessarily the final step. Fig. 16 shows a manufacturing method in the case where the molecule fixation membrane is formed before the sacrificial layer removing step. Fig. 17 shows a manufacturing method in the case where the molecule fixation membrane is formed after the sacrificial layer removing step. As shown in these drawings, when the molecule fixation membrane 104 is deposited on the membrane section 102 on the side of the sensor for detection in the molecule fixation membrane forming step, the molecule fixation membrane 204 is simultaneously deposited also on the membrane section 202 on the side of the sensor for reference (refer to Fig. 16(b) and Fig. 17(c)). By forming the membranes simultaneously on both, the completed sensor for detection and the completed sensor for reference are different only in existence or nonexistence of the air-gap and the other conditions can be equalized. The final step in this case is the through area for etching sealing step for forming the coating sections 123, 124 by coating the through areas for etching 121, 122 (refer to Fig. 16(d) and Fig. 17(d)).

A step for removing the membrane section 202 and the molecule fixation membrane 204 deposited on the side of the sensor for reference by etching process or the like may be included as mentioned above. Furthermore, a step for removing the protection film PM may be added thereafter. By including these steps, the light receiving surface of the photodiode 201 for the reference sensor can be exposed. The processing circuit such as MOSFET may be formed simultaneously in addition to the sensor for detection and the sensor for reference. In this case, as illustrated in Fig. 13, the elements can be manufactured simultaneously by forming the electrodes and the like appropriately in the manufacturing steps of the sensors.

### (Other modifications)

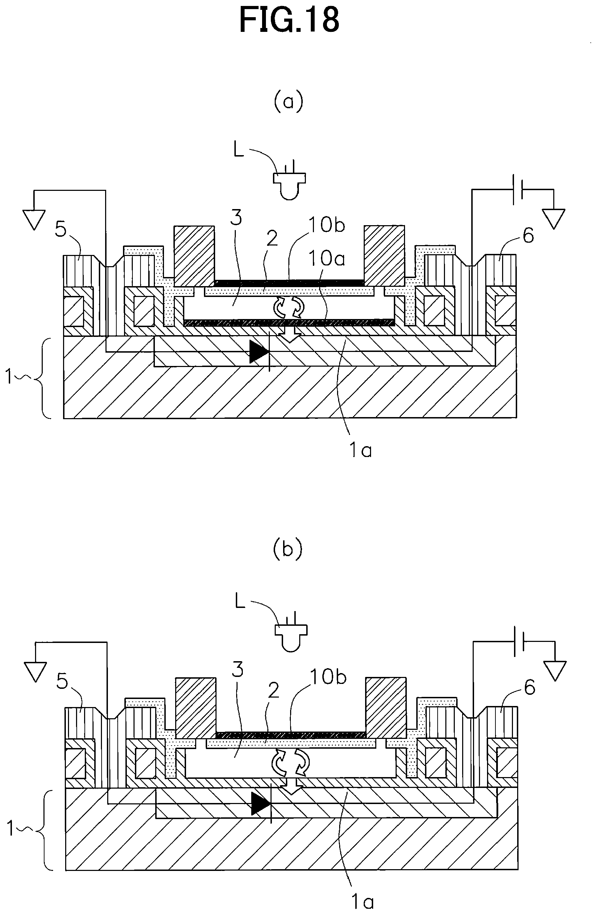

Fig. 18 (a) is a diagram showing a modification of a physical/chemical sensor. According to the modification shown in the drawing, in the above-mentioned embodiments of the physical/chemical sensor, further, a half mirror (first metal film) 10a is formed on the surface of the light receiving surface 1a of the photodiode 1, and further, a half mirror (second metal film) 10b is formed also on the surface of the membrane section 2. In this way, the half mirrors are formed on the light receiving surface 1a side and the membrane section 2 side to sandwich the air-gap 3 with the half mirrors, whereby the reflectance in the air-gap 3 improves. Accordingly, the half width of the interference of the light inside the air-gap 3 becomes narrow, so the change of the transmittance of the light to the photodiode side is brought to an extreme state with respect to the displacement of the membrane section 2. As a result, the fixed state of the specific substance (molecule or the like) can be measured precisely. A material having an ability to fix substance (molecule or the like) may be used as the material of the half mirror 10b on the membrane section 2 side in this case. Thus, the specific substance can be fixed to the surface of the half mirror 10b and the change of the surface stress of the membrane section 2 due to the intermolecular force can be obtained. In addition, as mentioned above, if gold is used as a material having the ability to fix the substance (molecule or the like) in the physical/chemical sensor, the membrane section 2 can function as the half mirror (second metal film) 10b. In this case, by forming the half mirror 10a only on the light receiving surface 1a side of the photodiode 1, an effect of the same kind can be obtained.

Alternatively, there may be an embodiment in which the half mirror (second metal film) 10b is formed only on the surface of the membrane section 2 as shown in Fig. 18(b). Also in such the embodiment, the light transmitted through the membrane section 2 can be reflected by the half mirror 10b provided on the surface of the membrane section 2. Therefore, the reflectance in the air-gap 3b can be improved. Accordingly, as compared to the embodiment in which the half mirror 10b is not provided, the half width of the interference of the light inside the air-gap 3 becomes narrow also in the above-mentioned embodiment. As a result, the change of the transmittance of the light to the photodiode side is made remarkable with respect to the displacement of the membrane section 2, and the fixed state of the specific substance (molecule or the like) can be measured more precisely. In this embodiment, if the membrane section 2 has the ability to fix the substance (molecule or the like) (or if at least the surface of the membrane section 2 has the fixation ability) and if precious metal such as gold is used, the membrane section 2 and the half mirror (second metal film) 10b can be formed integrally.

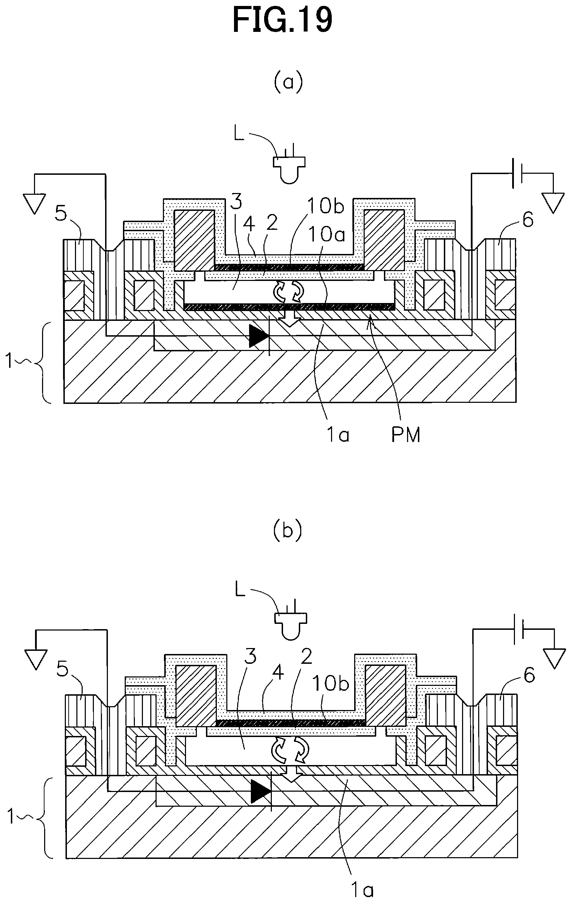

Fig. 19(a) is a diagram showing a modification further modifying a part of the above-mentioned modification (refer to Fig. 18(a)). As shown in the drawing, this modification forms a half mirror (second metal film) 10b between the membrane section 2 and the molecule fixation membrane 4. This modification is constructed such that, in the case where the substance (molecule or the like) to be fixed with the molecule fixation membrane 4 does not fix to the precious metal (gold or silver), the half mirror 10b is formed on the membrane section 2 side to exert the ability to fix the specific substance by the molecule fixation membrane 4. Thus, by forming the half mirror 10b between the membrane section 2 and the molecule fixation membrane 4, the sufficient molecule fixation ability by the molecule fixation membrane 4 is obtained, and also the reflectance of the light inside the air-gap 3 can be improved as in the above. In this modification, the half mirror 10b formed on the membrane section 2 side is provided by the metal film formed by forming a metal material such as gold, silver or copper in the shape of a film. By forming the metal film to be thin, preferable transmittance and reflectance of the light can be obtained. In this case, the transmittance of the light can be adjusted with the thickness of the half mirror 10b.

Also in the above modifications, a construction in which the half mirror (second metal film) 10b is formed only on the membrane section 2 side can be employed. Fig. 19(b) shows an example. In the embodiment shown in the drawing, a half mirror (second metal film) 10b is deposited between the membrane section 2 and the molecule fixation membrane 4. Also in such the case where the half mirror 10b is formed only on the membrane section 2 side, the reflectance of the light, which has transmitted through the membrane section 2, inside the air-gap 3 improves. Therefore, the half width of the interference of the light inside the air-gap 3 can be made still narrower.

When the half mirror (first metal film) 10a is formed on the surface of the light receiving surface 1a of the photodiode 1 in the modification mentioned above (refer to Fig. 19(a)), the illustrated embodiment forms the half mirror 10a on the surface of the protection film PM deposited for protecting the light receiving surface 1a from the etching gas. Alternatively, the protection film PM may be omitted.

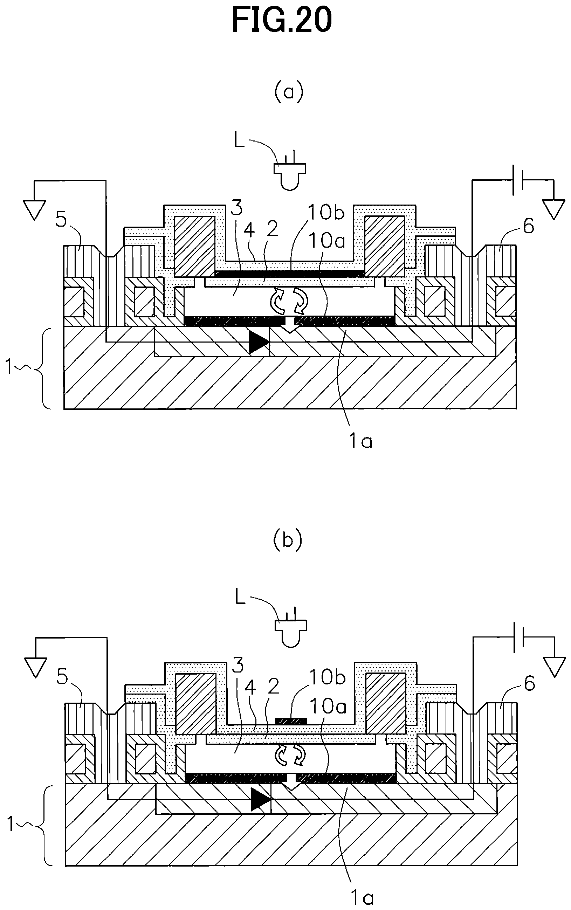

That is, as shown in Fig. 20 (a), the protection film PM is not provided or the protection film PM is removed, and then, the half mirror (first metal film) 10a is formed on the light receiving surface 1a of the photodiode 1. In such the construction, the first metal film 10b formed in the shape of a film as the half mirror can function as the protection film for protection from the etching gas, and also variation of the transmittance characteristic of the light due to deposition of multiple layers can be avoided.

In addition, as a further modification, a half mirror (second metal film) 10b may be formed on the surface of the molecule fixation membrane 4 deposited on the membrane section 2. In this case, the half mirror 10b is not formed on the entirety of the molecule fixation membrane 4 (entire area deposited on the membrane section 2). Rather, the half mirror 10b is formed on a part of the molecule fixation membrane 4 (suitable area substantially in center of molecule fixation membrane 4 deposited on membrane section 2). This state is shown in Fig. 20(b). In the case where the half mirror 10b is formed near the center of the molecule fixation membrane 4 deposited on the membrane section 2 as shown in the drawing, the molecule that can be fixed to the molecule fixation membrane 4 is fixed in the area excluding the half mirror 10b. The bending state of the membrane section 2 in the case where the molecule is fixed can be set not to differ largely from the case where the half mirror 10b is not formed. That is, when the membrane section 2 bends, the periphery of the membrane section 2 deforms largely. Regarding this point, since the deformation amount near the center is small, the bending state of the membrane section 2 does not differ largely even if the metal film (half mirror 10b) near the center does not deform. When the half mirror 10b is formed on a part of the molecule fixation membranes 4 as shown in the drawing, the reflectance of the light in the area where the half mirror 10b is formed can be improved by restricting the spot size of the entering light.

As the manufacturing process for forming the half mirror (first metal film) 10a on the light receiving surface 1a side of the photodiode 1, there is a method of forming the metal film on the surface of the light receiving surface 1a of the photodiode 1 (or surface of protection film PM) by a sputtering method or a vapor-deposition method using a metal film constituent material as a leading process for forming the sacrificial layer 7 (Fig. 9). At that time, if the protection film PM is not provided on the light receiving surface 1a (refer to Figs. 20(a) and 20(b)), the first metal film 10a is deposited after the silicon dioxide film on the surface of the photodiode 1 manufactured by a predetermined semiconductor process is removed. If the half mirror (second metal film) 10b is formed on the membrane section 2 side, the second metal film forming step for forming the second metal film may be performed after the above-mentioned membrane section forming step or the molecule fixation membrane forming step.

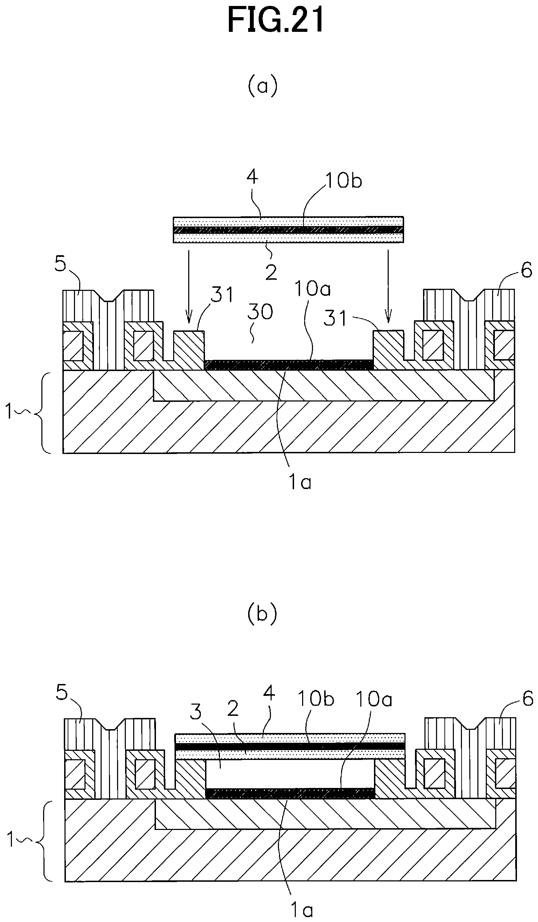

Alternatively, there is also a method of manufacturing the physical/chemical sensor having the half mirror 10a by bonding technology. The outline is shown in Fig. 21. As shown in Fig. 21(a), a boundary section 31 is formed around an area where the air-gap is to be formed without forming the sacrificial layer in the photodiode 1, and a concave 30 is formed in the area. The membrane section 2, on which the half mirror 10b and the molecule fixation membrane 4 are deposited, is prepared, and the membrane section 2 is bonded to the boundary section 31.

As a result of such bonding, a Fabry-Perot resonator is constituted as shown in Fig. 21(b). The concave 30 formed in the photodiode 1 is surrounded by the boundary section 31 and the membrane section 2 and has the same construction as the above-mentioned air-gap 3. According to such the manufacturing method, the etching process of the sacrificial layer 7 can be omitted. Therefore, mixing of impurity into the metal film 10a (contamination) due to the etching gas during the etching of the sacrificial layer 7 can be avoided. Also in the method etching the sacrificial layer 7, contamination can be suppressed by deposition of a transparent protection film on the surface of the metal film 10a, for instance.

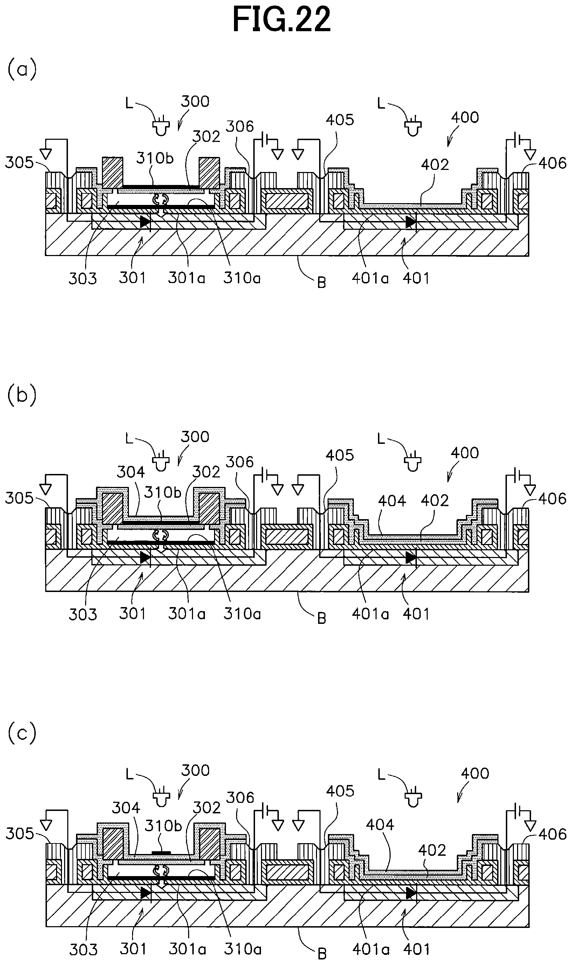

Fig. 22 is a diagram showing modifications of the physical-chemical phenomenon sensing device. These use the modification of the above-mentioned physical/chemical sensor. In each of them, the half mirror (first metal film) 310a is formed on the light receiving surface 301a side of the detection sensor 300. Fig. 22(a) shows an embodiment in which the half mirror (second metal film) 310b is formed on the surface of the membrane section 302. Fig. 22(b) shows an embodiment in which the half mirror 310b is formed between the membrane section 302 and the molecule fixation membrane 304. Fig. 22(c) shows an embodiment in which the half mirror 310b is formed on a part of the surface of the molecule fixation membrane 304. As shown in these drawings, the half mirrors 310a, 310b are formed only on the detection sensors 300. In this way, by forming the half mirrors 310a, 310b only on the detection sensors 300, the reflectance in the air-gap 303 in the detection sensor 300 improves, and the fixed state of the specific substance (molecule or the like) can be detected with high sensitivity. Since the reference sensor 400 does not have the half mirror, the state of the transmitted light can be grasped without changing the transmittance characteristic of the light.

The modifications of Fig. 22 only include examples, in which the half mirror 310a is formed on the light receiving surface 301a of the detection sensor 300. Alternatively, there may also be an embodiment, in which the half mirror 310b is provided only on the membrane section 302 side. An example in which the protection film PM and the membrane section 402 are deposited on the light receiving surface 401a of the reference sensor 400 (refer to Fig. 22(a)) and an example, in which the molecule fixation membrane 304 is deposited on them (refer to Fig. 22(b) and 22(c)) are illustrated. Alternatively, there also may be an embodiment in which the respective membranes of the reference sensor 400 are removed as mentioned above to expose the light receiving surface 401a (refer to Fig. 7). These embodiments may be selected according to the kind and quantity of the specific substance (molecule or the like) to be inspected.

When the modifications (Fig. 22) of the above physical/chemical phenomenon sensing device are manufactured, the forming step of the metal film may be performed in the manufacturing step of the photodiode of the detection sensor in the embodiment of the manufacturing method mentioned above. That is, the first metal film is deposited by performing the first metal film forming step for forming the first metal film as a step prior to a step for providing the sacrificial layer by the sacrificial layer forming step. The second metal film is deposited by performing the second metal film forming step for forming the second metal film after the membrane section forming step or the molecule fixation membrane forming step. There is also a manufacturing method of manufacturing the detection sensor 300 by the bonding process as mentioned above instead of these manufacturing methods.

In the above-mentioned first and/or second metal film forming step, the metal suitable for the half mirror is deposited into the shape of film by the sputtering method or the vapor-deposition method. Gold, silver, or copper may be used as the metal material. The film thickness of the formed metal film is determined in consideration of the transmittance and the reflectance of the light. Suitable reflection efficiency can be acquired with the thin film state of approximately 30 nm.

The embodiments and the modifications of the invention of the present application are as above but they are only examples and the present invention is not limited thereto. Specifically, the material constituting the membrane section 2 or the molecule fixation membrane 4 is not limited to the parylene or the precious metal shown above. Rather, any other materials than the above can be used as long as the material has optical transperancy and flexibility. In this case, it is preferable that the material can be deposited on the surface of the sacrificial layer 7 by a deposition method, a sputtering method or a vapor-deposition method.

### (Example embodiments)

Next, specific example embodiments of the physical/chemical sensor will be described.

### (Example embodiment 1)

The physical/chemical sensor was manufactured based on the first embodiment of the invention concerning the manufacturing method of the physical/chemical sensor. In this example embodiment, the molecule fixation membrane forming step was provided as the final step, and the protein sensor for detecting protein was manufactured. Polysilicon was used as the sacrificial layer 7 and was formed in the shape of a membrane with thickness of 300 nm. Further, the membrane section 2 using the parylene-N having a diameter of 150 µm was formed on the surface. The through areas for etching were formed at four positions in the peripheral portion of the membrane section 2. The thickness of the membrane section 2 was 350 nm. The sacrificial layer 7 was removed by dry etching process. The parylene-AM was deposited as the antibody fixation membrane by using the vapor-deposition method.

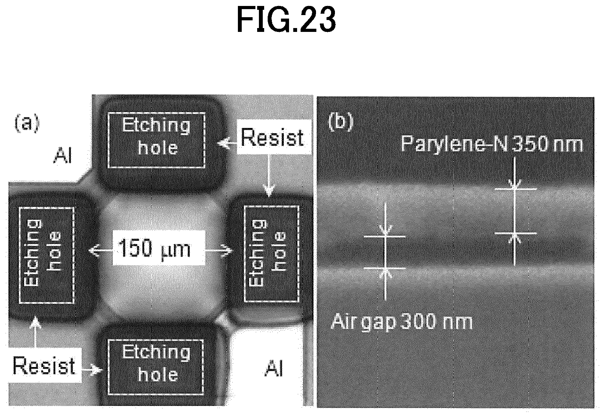

A status of the surface of the protein sensor manufactured as above is shown in Fig. 23(a). An SEM photograph of a cross section thereof is shown in Fig. 23(b). "Etching hole" in Fig. 23(a) means the through areas for etching 21, 22. "Resist" indicates the coating sections 23, 24. "Air gap" in Fig. 23(b) means the air-gap 3. "Parylene-N" means the membrane section 2 formed with the parylene-N. As clearly shown in this drawing, the membrane section 2 is formed in the center of the sensor. It was determined that an air-gap providing a suitable distance between the surface of the photodiode and the membrane section was formed.

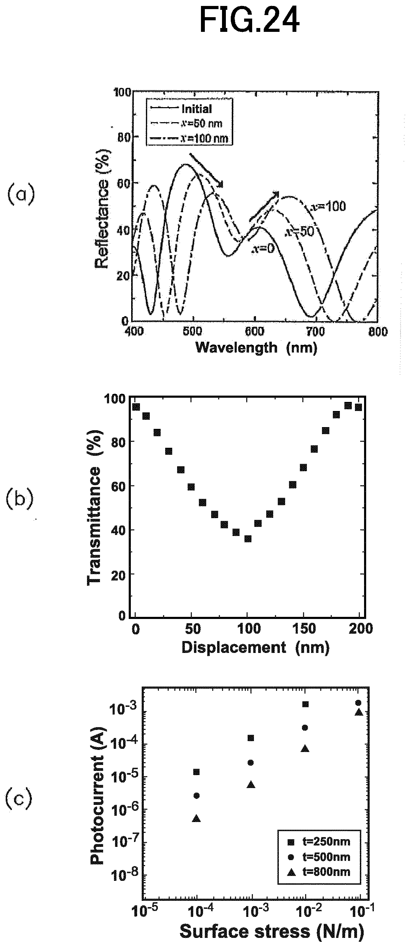

As a study of the change of the light intensity in the case where the spatial distance of the air-gap 3 (i.e., distance between surface on photodiode side and membrane section 2) changes, that is, in the case where the above spatial distance changes due to the bending of the membrane section 2 in the protein sensor manufactured in this way, the transmittance of the Fabry-Perot resonator, in which the molecule fixation membrane 4 is deposited on the membrane section 2, was simulated. The result is shown in Fig. 24(a). The thickness of the membrane section 2 at that time is 800 nm, and "x" in the drawing shows a change amount of the spatial distance. As shown in the drawing, even when the light has the same wavelength, the intensity of the light reaching the photodiode changes if the spatial distance changes. In addition, specifically, the light is limited to the light having the wavelength of 600 nm, and the light intensity with respect to the change of the spatial distance in the case of ideal film thickness was simulated. The result is shown in Fig. 24(b). As shown in the drawing, the light intensity of the specific wavelength (600 nm) changes with the spatial distance. If the current value generated by the photodiode is converted into the intermolecular force, the change of the surface stress can be measured according to the change of the diode current as shown in Fig. 24(c). Sign "t" in Fig. 24(c) shows the film thickness of the membrane section 2.

In this way, when the photodiode is irradiated with the light of the specific wavelength through the membrane section 2, the intensity of the light having the specific wavelength and reaching the photodiode changes when the membrane section 2 bends. Naturally, the diode current also changes with the change of the light intensity. Therefore, the change of the diode current can be converted into the surface stress of the membrane section 2, taking the thickness of the membrane section 2 into consideration. The change of the surface stress is the change of the intermolecular force of the protein adhering to the membrane section 2. Therefore, by sensing the intensity of the specific wavelength with the photodiode, the bending amount of the membrane section 2 (i.e., change amount of spatial distance) can be grasped and can be converted into the intermolecular force.

### (Experiment example 1)

Then, detection of the bending state of the membrane section 2 was experimented by using the protein sensor manufactured by the manufacturing method described in the above description of the example embodiment. As an experimental procedure, the change of the photocurrent value at the time when a reverse bias voltage was applied to the photodiode was measured in three states (modes) of a state where nothing is fixed to the surface of the antibody fixation membrane 4, a state where the antibody fixation membrane 4 was cleaned with saline, and a state where bovine serum albumin (BSA) antibody was fixed to the antibody fixation membrane 4. More specifically, the sensor surface was cleaned with the saline (phosphate buffered saline: PBS), then the BSA antibody was dropped thereon, then drying process is performed under the environment of 37 degree C, then cleaning with the PBS was performed again, and then drying process was performed. Since the parylene-AM is used as the antibody fixation membrane 4, the BSA antibody electrically binds to the amino group of the parylene-AM and is fixed to the antibody fixation membrane 4. For double-check, observation was performed with a fluorescence microscope using a BSA antibody modified with fluorescence, and existence of the BSA antibody was determined.

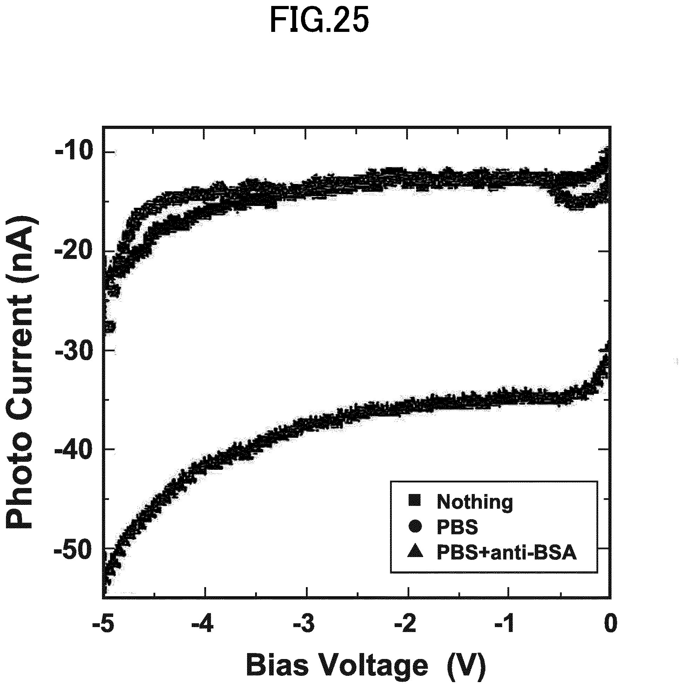

The sensor surface was observed with the optical microscope before and after dropping a BSA antibody, and it was observed that the surface, which was blue before the BSA antibody was dropped, changed to red after the BSA antibody was dropped. The photocurrent of the photodiode in the case of using the light source of 1nW, which irradiates the light of a specific wavelength (600 nm), was measured, and there was a change before and after the dropping of the BSA antibody. The measured values are shown in Fig. 25. In the drawing, "Nothing" means an initial state. "PBS" means a state cleaned with the saline. "PBS+anti-BSA" means a state where the BSA antibody was dropped after cleaning with the saline. As shown in this drawing, there was no change in the photocurrent before and the after the cleaning with the saline, but, there was seen a change in the current of approximately 23.7 nA before and after the dropping of the BSA antibody. Thus, it became clear that the change of the intermolecular force due to the BSA antibody can be measured as the change of the photocurrent by the photodiode.

In the above experiment example, the state before and after dropping the BSA antibody to the sensor was observed. The change of the membrane section 2 can be measured similarly also when BSA binds to the BSA antibody. That is, the antibody and the antigen are kinds of protein. If specific protein is fixed to the surface of the membrane section 2 (more specifically, surface of antibody fixation membrane 4), the intermolecular force acts and the surface stress of the membrane section 2 changes. Therefore, if the antigen binds to the antibody, the intermolecular force acts more strongly, and a similar phenomenon occurs. From the above, it became clear that, by using a body fluid extracted from a human body, the sensor can be used to determine whether the person is suffering a specific disease.

### (Example embodiment 2)

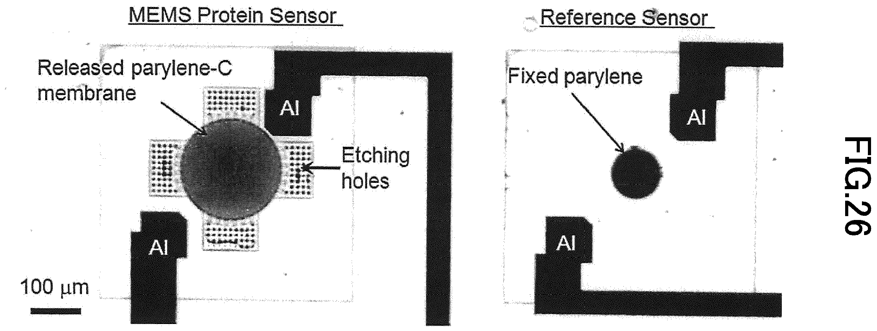

Next, a specific example embodiment of a physical/chemical phenomenon sensing device will be explained. A sensing device was manufactured based on the first embodiment of the invention concerning the physical/chemical phenomenon sensing device. Also in this embodiment, the molecule fixation membrane forming step was provided as the final step, and the protein sensor for detecting protein was manufactured as the sensor for detection. Polysilicon was used for the sacrificial layer for manufacturing the sensor for detection. The sacrificial layer was formed in the shape of a film with thickness of 300 nm, and the membrane section of the parylene-C having the diameter of 200 µm was formed on its surface. As the through areas for etching, multiple minute holes were formed at four positions in the peripheral portion of the membrane section. The thickness of the membrane section was 360 nm and the sacrificial layer was removed by dry etching process. The parylene-AM was deposited as the antibody fixation membrane by the vapor-deposition method. Like the sensor for detection, the sensor for reference was manufactured by forming the parylene-C in the shape of a membrane with the thickness of 360 nm, and then the parylene-AM was deposited. Fig. 26 shows a status after the parylene-C was formed in the shape of a membrane (before coating through areas for etching) photographed with the optical microscope. In the drawing, "MEMS Protein Sensor" shows the sensor for detection for detecting protein. "Released parylene-C membrane" and "Fixed parylene" are portions formed in the shape of membranes by vapor-depositing the parylene-C. "Etching holes" are multiple through areas for etching formed to be small. "Al" indicates electrodes. As shown in the drawing, the area for forming the detection sensor and the area for forming the reference sensor are formed in parallel on the same substrate. Then, the through areas for etching are coated and the parylene-AM is vapor-deposited, whereby the above-mentioned sensing device can be formed.

### (Experiment example 2)

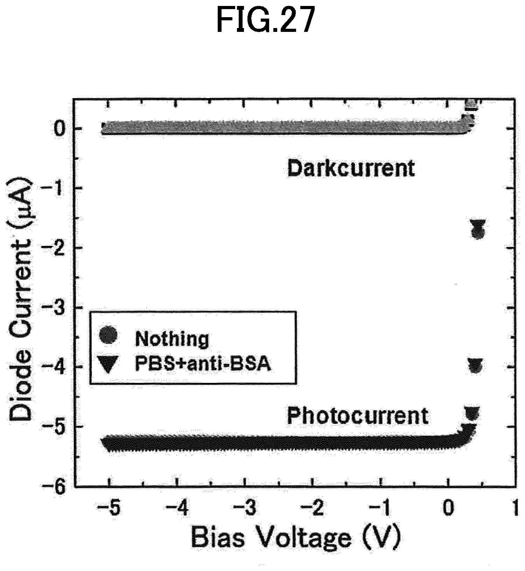

Next, the change of the light transmittance of the sensor for reference was experimented by using the physical/chemical phenomenon sensing device illustrated in the above description of the example embodiment. As an experimental procedure, the change of the photocurrent value at the time when a reverse bias voltage was applied to the photodiode was measured in two cases (modes) of a state where nothing is fixed to the surface of the antibody fixation membrane and a state where the BSA antibody was fixed to the antibody fixation membrane (both states are the same as cases used for detection sensor). Values of a dark current and a photocurrent of the photodiode before and after dropping the BSA antibody were measured in the case where a light source with an output of 400 µW/cm² that irradiates the light of a specific wavelength (780 nm) was used. The measurement result is shown in Fig. 27. In the drawing, "Nothing" indicates an initial state, and "PBS+anti-BSA" indicates a state where the BSA antibody was dropped after cleaning with the saline. In the drawing, "Darkcurrent" indicates the dark current, and "Photocurrent" indicates the photocurrent. As for the graphs of the dark current and the photocurrent, states before and after the dropping of the BSA antibody are shown in an overlapping manner.

As is clear from the experimental result shown in the drawing, in the sensor for reference, the dark current and the photocurrent did not change before and after the dropping of the BSA antibody (graphs in drawing overlap with each other). This indicates that the transmittance of the light does not change even when the BSA antibody (protein) is fixed to the membrane section by dropping the BSA antibody. Therefore, when an opaque gas or liquid is dropped and the measurement value of the reference sensor changes, it can be determined that the difference of the measurement values corresponds to the change in the light transmittance caused by the opaque gas or liquid.

### (Example embodiment 3)

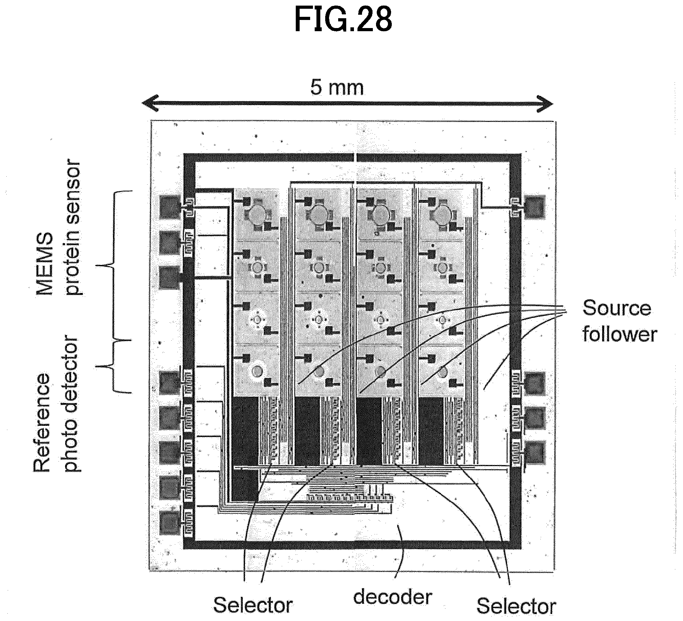

Furthermore, a chip is manufactured by forming a sensor array, in which multiple detection sensors and reference sensors are arranged, a source follower circuit, a decoder and a selector on a single substrate. Fig. 28 shows a photograph of a surface of the chip taken with an optical microscope. In the drawing, an area indicated as "MEMS protein sensor" shows an array section in which the detection sensors for detecting protein are arranged in four columns of three pieces each. An area indicated as "Reference photo detector" shows an array section in which the reference sensors are aligned in four columns of one piece each. As shown in the drawing, on the surface of the single substrate of 5 mm x 5 mm, a total of sixteen sensors of 4x4 in every direction are arranged and manufactured. Four (one in each column) in the sensors could be provided as the reference sensors. The chip is manufactured such that a selection circuit is formed by one decoder and four selectors and such that the output value of each sensor is outputted through the source follower circuit. With such the small chip, adsorption of multiple types of substances (molecules) can be detected simultaneously. It became possible to also refer to the change of the light transmittance by the reference sensor.

### (Analysis example 1)

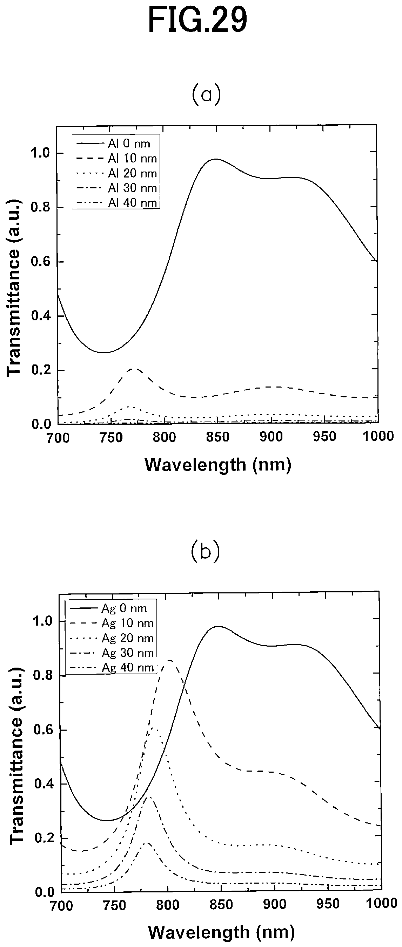

Then, the change of the transmittance of the light in the physical/chemical sensor in the case where the half mirror was formed was analyzed. The sensor used for the analysis has the construction shown in Fig. 18(b). The metal film 10b was formed on the surface of the membrane section 2, and the transmittance of the light was measured. In this analysis example, the metal film was not provided on the light receiving surface side of the photodiode. The thickness of the silicon dioxide film on the light receiving surface was set at 400 nm, the air-gap was set at 500 nm, and the thickness of the membrane section (parylene-C) was set at 500 nm. The transmitted light was measured about the case where aluminum was deposited and the case where silver was deposited on the surface of the membrane section while changing the thickness of the film. The analysis result is shown in Fig. 29.

As shown in the drawing, it was found that the half width of the interference wavelength of the light becomes narrow in the embodiment in which the aluminum was formed in the shape of a film (refer to Fig. 29(a)). However, even when the thickness of the film is 10nm, the transmitted light decreased extremely. In the embodiment in which the silver is deposited (refer to Fig. 29(b)), the half width of the interference wavelength narrowed in the every embodiment. The intensity of the transmitted light decreases as the thickness increases, but the transmitted light was sufficiently detectable in the range from 10 nm to 40 nm.

### (Analysis example 2)

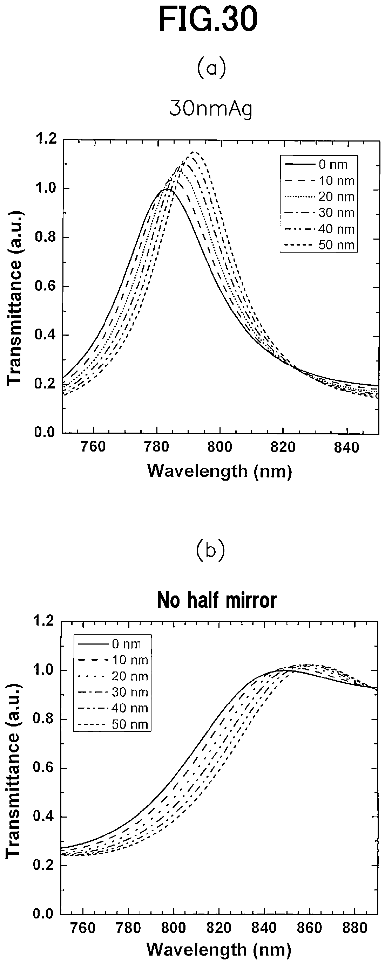

Further, in addition to the result of the above-mentioned analysis example 1, the bending of the membrane section 2 was analyzed. In this analysis, the bending (displacement) of the membrane section and the light transmittance were measured in the case where silver was deposited at the thickness of 30 nm as the half mirror (metal film). The result is shown in Fig. 30(a). A similar measurement result is shown in Fig. 30(b) about the sensor that has no half mirror (metal film) for reference.

As is apparent from the above, in the case of the sensor in which the half mirror (metal film) was formed, the change of the transmittance with respect to the displacement of the membrane section was remarkable. It is determined that this is caused by the improvement of the reflectance of the light in the air-gap (i.e., inside Fabry-Perot resonator).

### (Analysis example 3)

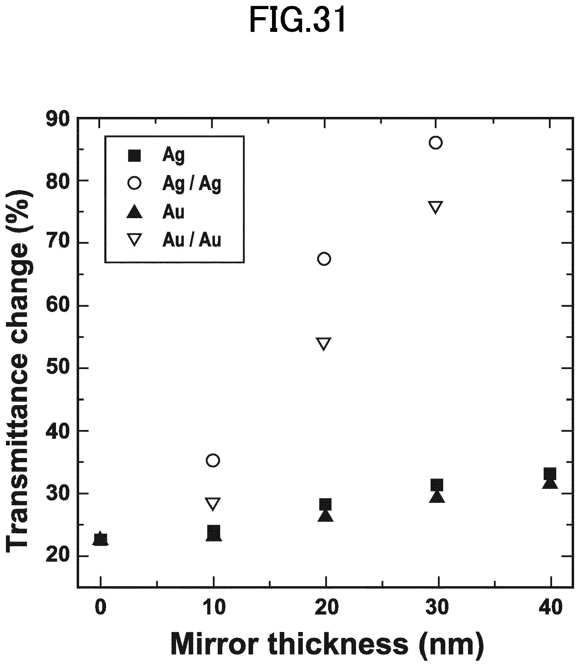

Finally, transmittance was analyzed in the case where the half mirror (metal film) was formed only on the surface of the membrane section (embodiment of above analysis example 1) and in the case where the half mirror (metal film) was formed also on the photodiode side (embodiment shown in Fig. 18(a)). In both cases of the half mirrors (metal layers), the analysis was performed in the case of using silver and in the case of using gold respectively. The wavelength of the light source was set at 780 nm. The thickness of each metal layer was varied by every 10nm. The analysis was performed from the case where the metal layer is not formed (0 nm in the drawing) to the case where the thickness of the metal layer is 40 nm. The result is shown in Fig. 31. The horizontal axis of the drawing shows the thickness of the half mirror, and the vertical axis shows the change of the transmittance at the time when the membrane section moves to 50 nm. In the drawing, "Ag" means the case where the half mirror of silver is provided only on the membrane section side. "Ag/Ag" means the case where the half mirrors of silver are provided on both of the membrane section side and the photodiode side. "Au" means the case where the half mirror of gold is provided only on the membrane section side. "Au/Au" means the case where the half mirrors of gold are provided on both of the membrane section side and photodiode side.

As shown in this drawing, it became clear that the transmittance of the light is improved by setting the film thickness at 20 nm or larger in the case where the gold is used as well as the case where the silver is used. Further, it became clear that the transmittance improves more largely in the case where the half mirror is provided also on the photodiode side than in the case where the half mirror is provided only on the membrane section side. Moreover, as can be seen from the above-explained analysis result of the gold and silver, the metal material used as the half mirror should be preferably selected from materials having suitable translucency and optical reflectance, i.e., materials having low absorption constant. Copper and the like can be also used.

Accordingly, the present application discloses following aspects of the invention.

### (About physical chemistry sensor)

(1) A physical/chemical sensor comprising a membrane section provided on a surface of a light receiving surface of a light receiving element such that the membrane section forms an air-gap and faces the light receiving surface, wherein the membrane section has optical transparency and flexibility, the membrane section and the surface of the light receiving surface form a Fabry-Perot resonator, and the membrane section has a substance fixation ability at least on an outside surface thereof.
(2) A physical/chemical sensor comprising a membrane section that forms an air-gap on a surface of a light receiving surface of a light receiving element and faces the light receiving surface, and a molecule fixation membrane deposited on an outside surface of the membrane section for fixing a molecule contained in a gas or a liquid, wherein the membrane section has optical transparency and flexibility, and the membrane section and the surface of the light receiving surface form a Fabry-Perot resonator.
(3) The physical/chemical sensor as in (2), wherein the molecule fixation membrane is a molecule fixation membrane that fixes a molecule contained in a specific gas.
(4) The physical/chemical sensor as in (2), wherein the molecule fixation membrane is a biopolymer fixation membrane that fixes a biopolymer.
(5) The physical/chemical sensor as in (2), wherein the molecule fixation membrane is an antibody fixation membrane that fixes an antibody.
(6) The physical/chemical sensor as in (5), wherein the antibody fixation membrane is an antibody fixation membrane constituted with a material having an amino group.
(7) The physical/chemical sensor as in (6), wherein the membrane section is constituted with parylene-C or parylene-N, and the antibody fixation membrane is constituted with parylene-AM.
(8) The physical/chemical sensor as in any one of (1) to (7), further comprising a metal film deposited on a part or entirety of a surface of the membrane section, the molecule fixation membrane, or the antibody fixation membrane.
(9) The physical/chemical sensor as in any one of (1) to (6), further comprising a metal film deposited on the light receiving surface of the light receiving element.
(10) The physical/chemical sensor as in any one of (1) to (9), wherein the light receiving element is a photodiode.
(11) The physical/chemical sensor as in any one of (1) to (10), wherein the air-gap is blocked air-tightly or liquid-tightly at least on the membrane section side.

### (About a sensor array)

(12) A sensor array using the physical/chemical sensor as in any one of (1) to (11), wherein a plurality of the physical/chemical sensors are formed on the same substrate.
(13) The sensor array as in (12), wherein the substrate has a processing circuit for processing a signal sensed with the physical/chemical sensor.
(14) The sensor array as in (13), wherein the substrate has a selection circuit for selectively inputting a signal to the physical/chemical sensors.

### (About physical/chemical phenomenon sensing device)

(15) A physical/chemical phenomenon sensing device that uses the physical/chemical sensor as in any one of (1) to (11), comprising the physical/chemical sensor and a reference sensor, wherein the reference sensor uses a light receiving element of the same kind as the light receiving element used for the physical/chemical sensor and is constructed such that a light receiving surface thereof is exposed.
(16) A physical/chemical phenomenon sensing device that uses the physical/chemical sensor as in any one of (1) to (11), comprising the physical/chemical sensor and a reference sensor, wherein the reference sensor is constructed by providing a membrane section of the same kind as the membrane section used for the physical/chemical sensor on a light receiving surface of a light receiving element of the same kind as the light receiving element used for the physical/chemical sensor without forming an air-gap.
(17) The physical/chemical phenomenon sensing device as in (15) or (16), wherein the physical/chemical sensor and the reference sensor are formed on the same substrate.
(18) The physical/chemical phenomenon sensing device as in any one of (15) to (17), wherein the light receiving element is a photodiode.
(19) The physical/chemical phenomenon sensing device as in any one of (15) to (18), wherein a sensor array is formed by arranging a plurality of the physical/chemical sensors and the reference sensors in one dimension or two dimensions on the same substrate, and the physical/chemical phenomenon sensing device has a processing circuit for processing a signal sensed with the physical/chemical sensors.
(20) The physical/chemical phenomenon sensing device as in (19), further comprising a selection circuit for selectively inputting a signal into either of the physical/chemical sensors and the reference sensors constituting the sensor array.

### (About manufacturing method of physical/chemical sensor)

(21) A manufacturing method of a physical/chemical sensor, comprising a sacrificial layer forming step for forming a sacrificial layer by depositing a material, which can be etched, on a light receiving surface of a light receiving element, a protection layer forming step for deposition of a protection layer on an area excluding a surface of the sacrificial layer, a membrane section forming step for forming a membrane section by depositing a membrane section constituent material on a membrane section construction area on the surface of the sacrificial layer excluding a through area for etching , a sacrificial layer removing step for etching the sacrificial layer using the through area for etching , and a through area for etching sealing step for coating the through area for etching.
(22) The manufacturing method of the physical/chemical sensor as in (14), further comprising a first metal film forming step for forming a first metal film by depositing a first metal film constituent material on the light receiving surface of the light receiving element, wherein the sacrificial layer forming step forms the sacrificial layer on the surface of the first metal film constituent material.
(23) The manufacturing method of the physical/chemical sensor as in (15), wherein the first metal film forming step deposits the first metal film constituent material by a sputtering method or a vapor-deposition method.
(24) The manufacturing method of the physical/chemical sensor as in (21), further comprising a molecule fixation membrane forming step for deposition of a molecule fixation material on the surface of the membrane section constituent material.
(25) The manufacturing method of the physical/chemical sensor as in any one of (21) to (24), further comprising a second metal film forming step for forming a second metal film by depositing a second metal film constituent material on a part or entirety of the surface of the membrane section constituent material or the molecule fixation material.
(26) The manufacturing method of the physical/chemical sensor as in (25), wherein the second metal film forming step deposits the second metal film constituent material by a sputtering method or a vapor-deposition method.
(27) The manufacturing method of the physical/chemical sensor as in any one of (24) to (26), wherein the step for deposition of the molecule fixation material is a biopolymer fixation membrane forming step for deposition of a biopolymer fixation material on the surface of the membrane section constituent material or the second metal film constituent material.
(28) The manufacturing method of the physical/chemical sensor as in any one of (24) to (26), wherein the step for deposition of the molecule fixation material is an antibody fixation membrane forming step for deposition of an antibody fixation material on the surface of the membrane section constituent material or the second metal film constituent material.
(29) The manufacturing method of the physical/chemical sensor as in (28), wherein the step for depositing the membrane section constituent material is a step for vapor-depositing parylene-N or parylene-C.
(30) The manufacturing method of the physical/chemical sensor as in (28) or (29), wherein the molecule fixation membrane forming step is a step for vapor-depositing parylene-A or parylene-AM.
(31) The manufacturing method of the physical/chemical sensor as in any one of (21) to (30), wherein the light receiving element is a photodiode manufactured by a semiconductor manufacturing process.

### (About manufacturing method of physical/chemical phenomenon sensing device)

(32) A manufacturing method of a physical/chemical phenomenon sensing device, comprising a sacrificial layer forming step for segmenting a plurality of light receiving elements formed on the same substrate into two kinds consisting of one kind for detection sensor or sensors and another kind for reference sensor or sensors and for forming a sacrificial layer by depositing a material, which can be etched, on a light receiving surface of the light receiving element for the detection sensor, a protection layer forming step for deposition of a protection layer on an area excluding the surface of the sacrificial layer and the light receiving surface of the light receiving element for the reference sensor, a membrane section forming step for forming a membrane section by depositing a membrane section constituent material on a membrane section construction area on the surface of the sacrificial layer excluding a through area for etching and the light receiving surface of the light receiving element for the reference sensor, a sacrificial layer removing step for etching the sacrificial layer using the through area for etching , and a through area for etching sealing step for coating the through area for etching.
(33) The manufacturing method of the physical/chemical phenomenon sensing device as in (32), further comprising a first metal film forming step for forming a first metal film by depositing a first metal film constituent material on the light receiving surface of the light receiving element for the detection sensor, wherein the sacrificial layer forming step is a step for forming a sacrificial layer on the surface of the first metal film constituent material deposited on the light receiving surface of the light receiving element for the detection sensor.
(34) The manufacturing method of the physical/chemical phenomenon sensing device as in (33), wherein the first metal film forming step deposits the first metal film constituent material by a sputtering method or a vapor-deposition method.
(35) The manufacturing method of the physical/chemical phenomenon sensing device as in (32), further comprising a molecule fixation membrane forming step for deposition of a molecule fixation material on the surface of the membrane section constituent material.
(36) The manufacturing method of the physical/chemical phenomenon sensing device as in any one of (32) to (35), further comprising a second metal film forming step for forming a second metal film by depositing a second metal film constituent material on a part or entirety of the surface of the membrane section or the molecule fixation membrane formed on the light receiving element for the detection sensor.
(37) The manufacturing method of the physical/chemical phenomenon sensing device as in (36), wherein the second metal film forming step deposits the second metal film constituent material by a sputtering method or a vapor-deposition method.
(38) The manufacturing method of the physical/chemical phenomenon sensing device as in any one of (35) to (37), wherein the step for deposition of the molecule fixation material is a biopolymer fixation membrane forming step for deposition of a biopolymer fixation material on the surface of the membrane section constituent material or the second metal film constituent material.
(39) The manufacturing method of the physical/chemical phenomenon sensing device as in any one of (35) to (37), wherein the step for deposition of the molecule fixation material is an antibody fixation membrane forming step for deposition of an antibody fixation material on the surface of the membrane section constituent material or the second metal film constituent material.
(40) The manufacturing method of the physical/chemical phenomenon sensing device as in any one of (35) to (39), further comprising a step for removing the membrane section constituent material and the molecule fixation material deposited or deposited on the light receiving surface of the light receiving element for the reference sensor.
(41) The manufacturing method of the physical/chemical phenomenon sensing device as in (39) or (40), wherein the step for depositing the membrane section constituent material is a step for vapor-depositing parylene-N or parylene-C.
(42) The manufacturing method of the physical/chemical phenomenon sensing device as in any one of (39) to (41), wherein the molecule fixation membrane forming step is a step for vapor-depositting parylene-A or parylene-AM.
(43) The manufacturing method of the physical/chemical phenomenon sensing device as in any one of (32) to (42), wherein the light receiving element is a photodiode manufactured by semiconductor manufacturing process.

### [Explanation of numerals]

1, 101, 201 Photodiode
1a, 101a, 201a Light receiving area
2, 102, 202 Membrane section
3, 103, 203 Air-gap
4, 104, 204 Molecule fixation membrane (antibody fixation membrane)
4a, 104a, 204a Membrane section surface (outside surface)
5, 6, 105, 106, 205, 206 Electrode
7, 107 Sacrificial layer
8, 108, 208 Deposition section
9, 109, 209 Silicon dioxide film
10a, 310a, 410a Half mirror (first metal film)
10b, 310b, 410b Half mirror (second metal film)
21, 22, 121,1 22 Through area for etching
23, 24, 123, 124 Coating section
100, 300 Detection sensor
200, 400 Reference sensor
A Antibody
P Antigen
L Light source
B Substrate
PM Protection film
M1 MOSFET region
M5, M6 Electrode
M8 Insulating layer (polysilicon)
X, X1, X2, X3, X4 Sensor
Y, Y1, Y2, Y3, Y4 Processing circuit
Z Selection circuit

## Claims

1. A physical/chemical sensor comprising:
a membrane section (2) provided on a surface of a light receiving surface of a light receiving element (1) such that the membrane section (2) forms an air-gap (3) and faces the light receiving surface (la), wherein
the membrane section (2) has optical transparency and flexibility,
the membrane section (2) and the surface of the light receiving surface (1a) form a Fabry-Perot resonator, and the membrane section (2) has a substance fixation ability at least on an outside surface (4a) thereof, wherein the fixation ability is a capability of fixing a molecule to the outside surface (4a) of the membrane section (2) preferably by adsorption or bond, **characterized in that** the physical/chemical sensor is adapted to detect a molecule fixed to the outside surface (4a) of the membrane section (2) by sensing the change of surface stress to the membrane section (2) due to intermolecular force.

2. A physical/chemical sensor as in claim 1 comprising:
a molecule fixation membrane (4) deposited only on an outside surface (4a) of the membrane section (2) for fixing a molecule contained in a gas or a liquid, wherein the molecule fixation membrane (4) is a molecule fixation membrane that fixes a molecule contained in a specific gas, or a biopolymer fixation membrane that fixes a biopolymer, or an antibody fixation membrane that fixes an antibody.

3. The physical/chemical sensor as in any one of claims 1 or 2, further comprising a metal film (10b) deposited on a part or entirety of a surface of the membrane section (2), the molecule fixation membrane (4), or the antibody fixation membrane (4).

4. The physical/chemical sensor as in any one of claims 1 to 3, further comprising a metal film (10a) deposited on the light receiving surface (1a) of the light receiving element (1).

5. A sensor array using the physical/chemical sensor as in any one of claims 1 to 4, wherein a plurality of the physical/chemical sensors are formed on the same substrate.

6. The sensor array as in claim 5, wherein the substrate has a processing circuit for processing a signal sensed with the physical/chemical sensor, and
has a selection circuit for selectively inputting a signal to the physical/chemical sensors.

7. A physical/chemical phenomenon sensing device that uses the physical/chemical sensor as in any one of claims 1 to 4, comprising:
the physical/chemical sensor according to claim 1 formed on a substrate; and
a reference sensor formed on the same substrate, wherein
the reference sensor is constructed by providing a membrane section of the same kind as the membrane section used for the physical/chemical sensor on a light receiving surface of a light receiving element (1) of the same kind as the light receiving element (1) used for the physical/chemical sensor without forming an air-gap.

8. The physical/chemical phenomenon sensing device as in claim 7, wherein
a sensor array is formed by arranging a plurality of the physical/chemical sensors and the reference sensors in one dimension or two dimensions on the same substrate, and
the physical/chemical phenomenon sensing device has a processing circuit for processing a signal sensed with the physical/chemical sensors and a selection circuit for selectively inputting a signal into either of the physical/chemical sensors and the reference sensors constituting the sensor array.

9. A manufacturing method of a physical/chemical sensor according to any one of claims 1 to 4, comprising:
a sacrificial layer (7) forming step for forming a sacrificial layer (7) by depositing a material, which can be etched, on a light receiving surface (1a) of a light receiving element (1);
a protection layer (9) forming step for depositing a protection layer (9) on an area excluding a surface of the sacrificial layer (7);
a membrane section (2) forming step for forming a membrane section (2) by depositing a membrane section (2) constituent material on a membrane section construction area on the surface of the sacrificial layer (7) excluding a through area for etching (21, 22);
a molecule fixation membrane (4) forming step for depositing a molecule fixation material on the surface of the membrane section (2) constituent material;
a sacrificial layer (7) removing step for etching the sacrificial layer (7) using the through area for etching (21, 22); and
a through area for etching (21, 22) sealing step for coating (23, 24) the through area for etching (21, 22).

10. The manufacturing method of the physical/chemical sensor as in claim 9, further comprising:
a first metal film (10a) forming step for forming a first metal film (10a) by depositing a first metal film (10a) constituent material on the light receiving surface (1a) of the light receiving element (1), wherein
the sacrificial layer (7) forming step forms the sacrificial layer (7) on the surface of the first metal film (10a) constituent material.

11. The manufacturing method of the physical/chemical sensor as in any one of claims 9 or 10, further comprising a second metal film (10b) forming step for forming a second metal film (10b) by depositing a second metal film (10b) constituent material on a part or entirety of the surface of the membrane section (2) constituent material or the molecule fixation material (4).

12. A manufacturing method of a physical/chemical phenomenon sensing device according to any one of claims 7 to 8, comprising:
a sacrificial layer (7) forming step for segmenting a plurality of light receiving elements (1) formed on the same substrate into two kinds consisting of one kind for detection sensor or sensors and another kind for reference sensor or sensors and for forming a sacrificial layer (7) by depositing a material, which can be etched, on a light receiving surface of the light receiving element (1) for the detection sensor;
a protection layer (9) forming step for depositing a protection layer (9) on an area excluding the surface of the sacrificial layer (7) and the light receiving surface (1a) of the light receiving element (1) for the reference sensor;
a membrane section (2) forming step for forming a membrane section by depositing a membrane section (2) constituent material on a membrane section (2) construction area on the surface of the sacrificial layer (7) excluding a through area for etching (21, 22) and the light receiving surface (1a) of the light receiving element (1) for the reference sensor;
a molecule fixation membrane (4) forming step for depositing a molecule fixation material on the surface of the membrane section (2) constituent material;
a sacrificial layer (7) removing step for etching the sacrificial layer (7) using the through area for etching (21, 22); and
a through area for etching (21, 22) sealing step for coating (23, 24) the through area for etching (21, 22).

13. The manufacturing method of the physical/chemical phenomenon sensing device as in claim 12, further comprising:
a first metal film (10a) forming step for forming a first metal film (10a) by depositing a first metal film (10a) constituent material on the light receiving surface (1a) of the light receiving element (1) for the detection sensor, wherein
the sacrificial layer (7) forming step is a step for forming a sacrificial layer (7) on the surface of the first metal film (10a) constituent material deposited on the light receiving surface (1a) of the light receiving element (1) for the detection sensor.

14. The manufacturing method of the physical/chemical phenomenon sensing device as in any one of claims 12 or 13, further comprising a second metal film (10b) forming step for forming a second metal film (10b) by depositing a second metal film constituent material on a part or entirety of the surface of the membrane section (2) or the molecule fixation membrane (4) formed on the light receiving element (1) for the detection sensor.

15. The manufacturing method of the physical/chemical phenomenon sensing device as in any one of claims 12 to 14, further comprising a step for removing the membrane section (2) constituent material and the molecule fixation material (4) deposited or laminated on the light receiving surface (1a) of the light receiving element (1) for the reference sensor.

## Patentansprüche

1. Physikalischer/chemischer Sensor, aufweisend:
einen Membranabschnitt (2), der sich auf einer Oberfläche einer Lichtaufnahmeoberfläche eines Lichtaufnahmeelements (1) befindet, so dass der Membranabschnitt (2) eine Luftlücke (3) bildet und der Lichtaufnahmeoberfläche (1a) zugewandt ist, wobei
der Membranabschnitt (2) eine optische Transparenz und Flexibilität aufweist,
der Membranabschnitt (2) und die Oberfläche der Lichtaufnahmeoberfläche (1a) einen Fabry-Perot-Resonator bilden, und
der Membranabschnitt (2) eine Substanzbefestigungsfähigkeit zumindest auf einer Außenfläche (4a) desselben aufweist, wobei die Befestigungsfähigkeit eine Fähigkeit ist, ein Molekül an der Außenoberfläche (4a) des Membranabschnitts (2) zu befestigen, vorzugsweise durch Adsorption oder Verklebung,
**dadurch gekennzeichnet, dass**
der physikalische/chemische Sensor darauf ausgelegt ist, ein Molekül zu erfassen,
das an der Außenoberfläche (4a) des Membranabschnitts (2) befestigt ist, indem er die Änderung der Oberflächenspannung des Membranabschnitts (2) aufgrund von intermolekularer Kraft erfasst.

2. Physikalischer/chemischer Sensor nach Anspruch 1, aufweisend:
eine Molekülbefestigungsmembran (4), die nur auf einer Außenoberfläche (4a) des Membranabschnitts (2) abgesetzt ist, um ein Molekül, das in einem Gas oder einer Flüssigkeit enthalten ist, zu befestigen, wobei die Molekülbefestigungsmembran (4) eine Molekülbefestigungsmembran, die ein Molekül befestigt, das in einem spezifischen Gas enthalten ist, oder eine Biopolymerbefestigungsmembran, die ein Biopolymer befestigt, oder eine Antikörperbefestigungsmembran, die einen Antikörper befestigt, ist.

3. Physikalischer/chemischer Sensor nach einem der Ansprüche 1 oder 2, ferner aufweisend einen Metallfilm (10b), der auf einem Teil oder der Gesamtheit einer Oberfläche des Membranabschnitts (2), der Molekülbefestigungsmembran (4) oder der Antikörperbefestigungsmembran (4) abgesetzt ist.

4. Physikalischer/chemischer Sensor nach einem der Ansprüche 1 bis 3, ferner aufweisend einen Metallfilm (10a), der auf der Lichtaufnahmeoberfläche (1a) des Lichtaufnahmeelements (1) abgesetzt ist.

5. Sensoranordnung, die den physikalischen/chemischen Sensor nach einem der Ansprüche 1 bis 4 verwendet, wobei eine Mehrzahl der physikalischen/chemischen Sensoren auf demselben Substrat ausgebildet ist.

6. Sensoranordnung nach Anspruch 5, wobei das Substrat eine Verarbeitungsschaltung zum Verarbeiten eines Signals aufweist, das mit dem physikalischen/chemischen Sensor erfasst wurde, und eine Auswahlschaltung aufweist, um ein Signal selektiv an die physikalischen/chemischen Sensoren einzugeben.

7. Physikalische/chemische Phänomenerfassungsvorrichtung, die den physikalischen/chemischen Sensor nach einem der Ansprüche 1 bis 4 verwendet, aufweisend:
den physikalischen/chemischen Sensor nach Anspruch 1, der auf einem Substrat ausgebildet ist; und
einen Referenzsensor, der auf demselben Substrat ausgebildet ist, wobei der Referenzsensor konstruiert wird, indem ein Membranabschnitt derselben Art als der Membranabschnitt bereitgestellt wird, der für den physikalischen/chemischen Sensor auf einer Lichtaufnahmeoberfläche eines Lichtaufnahmeelements (1) derselben Art als das Lichtaufnahmeelement (1) verwendet wird, das für den physikalischen/chemischen Sensor verwendet wird, ohne dass eine Luftlücke gebildet wird.

8. Physikalische/chemische Phänomenerfassungsvorrichtung nach Anspruch 7, wobei eine Sensoranordnung ausgebildet wird, indem eine Mehrzahl der physikalischen/chemischen Sensoren und der Referenzsensoren in einer Dimension oder zwei Dimensionen auf demselben Substrat angeordnet werden, und
die physikalische/chemische Phänomenerfassungsvorrichtung eine Verarbeitungsschaltung, um ein Signal zu verarbeiten, das mit den physikalischen/chemischen Sensoren erfasst wird, und eine Auswahlschaltung, um ein Signal in einen der physikalischen/chemischen Sensoren oder den Referenzsensoren, die die Sensoranordnung bilden, selektiv einzugeben, aufweist.

9. Herstellungsverfahren eines physikalischen/chemischen Sensors nach einem der Ansprüche 1 bis 4, aufweisend:
einen Schritt zum Ausbilden einer Opferschicht (7), bei dem eine Opferschicht (7) ausgebildet wird, indem ein Material, das geätzt werden kann, auf einer Lichtaufnahmeoberfläche (1a) eines Lichtaufnahmeelements (1) abgesetzt wird;
einen Schritt zum Ausbilden einer Schutzschicht (9), bei dem eine Schutzschicht (9) auf einer Fläche abgesetzt wird, die eine Oberfläche der Opferschicht (7) ausschließt;
einen Schritt zum Ausbilden eines Membranabschnitts (2), bei dem ein Membranabschnitt (2) ausgebildet wird, indem ein Einsatzmaterial des Membranabschnitts (2) in einem Membranabschnittskonstruktionsbereich auf der Oberfläche der Opferschicht (7) abgesetzt wird, die einen Durchgangsbereich zum Ätzen (21, 22) ausschließt;
einen Schritt zum Ausbilden einer Molekülbefestigungsmembran (4), bei dem ein Molekülbefestigungsmaterial auf der Oberfläche des Einsatzmaterials des Membranabschnitts (2) abgesetzt wird;
einen Schritt zum Entfernen der Opferschicht (7), bei dem die Opferschicht (7) unter Verwendung des Durchgangsbereichs zum Ätzen (21, 22) geätzt wird; und
einen Versiegelungsschritt für den Durchgangsbereich zum Ätzen (21, 22), bei dem der Durchgangsbereich zum Ätzen (21, 22) beschichtet wird (23, 24).

10. Herstellungsverfahren des physikalischen/chemischen Sensors nach Anspruch 9, ferner aufweisend:
einen Schritt zum Ausbilden eines ersten Metallfilms (10a), bei dem ein erster Metallfilm (10a) durch Absetzen eines Einsatzmaterials des ersten Metallfilms (10a) auf der Lichtaufnahmeoberfläche (1a) des Lichtaufnahmeelements (1) ausgebildet wird, wobei
der Schritt zum Ausbilden der Opferschicht (7) die Opferschicht (7) auf der Oberfläche des Einsatzmaterials des ersten Metallfilms (10a) ausbildet.

11. Herstellungsverfahren des physikalischen/chemischen Sensors nach einem der Ansprüche 9 oder 10, ferner aufweisend einen Schritt zum Ausbilden eines zweiten Metallfilms (10b), bei dem ein zweiter Metallfilm (10b) durch Absetzen eines Einsatzmaterials des zweiten Metallfilms (10b) auf einem Teil oder der Gesamtheit der Oberfläche des Einsatzmaterials des Membranabschnitts (2) oder des Molekülbefestigungsmaterials (4) ausgebildet wird.

12. Herstellungsverfahren einer physikalischen/chemischen Phänomenerfassungsvorrichtung nach einem der Ansprüche 7 bis 8, aufweisend:
einen Schritt zum Ausbilden einer Opferschicht (7), bei dem eine Mehrzahl an Lichtaufnahmeelementen (1), die auf demselben Substrat ausgebildet sind, in zwei Arten segmentiert wird, die aus einer Art für einen Erfassungssensor oder -sensoren und einer anderen Art für den Referenzsensor oder -sensoren bestehen, und bei dem eine Opferschicht (7) ausgebildet wird, indem ein Material, das geätzt werden kann, auf einer Lichtaufnahmeoberfläche des Lichtaufnahmeelements (1) für den Erfassungssensor abgesetzt wird;
einen Schritt zum Ausbilden einer Schutzschicht (9), bei dem eine Schutzschicht (9) auf einer Fläche abgesetzt wird, die die Oberfläche der Opferschicht (7) und die Lichtaufnahmeoberfläche (1a) des Lichtaufnahmeelements (1) für den Referenzsensor ausschließt;
einen Schritt zum Ausbilden eines Membranabschnitts (2), bei dem ein Membranabschnitt (2) ausgebildet wird, indem ein Einsatzmaterial des Membranabschnitts (2) in einem Membranabschnitts-(2)-Konstruktionsbereich auf der Oberfläche der Opferschicht (7) abgesetzt wird, die einen Durchgangsbereich zum Ätzen (21, 22) und die Lichtaufnahmeoberfläche (1a) des Lichtaufnahmeelements (1) für den Referenzsensor ausschließt;
einen Schritt zum Ausbilden einer Molekülbefestigungsmembran (4), bei dem ein Molekülbefestigungsmaterial auf der Oberfläche des Einsatzmaterials des Membranabschnitts (2) abgesetzt wird;
einen Schritt zum Entfernen der Opferschicht (7), bei dem die Opferschicht (7) unter Verwendung des Durchgangsbereichs zum Ätzen (21, 22) geätzt wird; und
einen Versiegelungsschritt für den Durchgangsbereich zum Ätzen (21, 22), bei dem der Durchgangsbereich zum Ätzen (21, 22) beschichtet wird.

13. Herstellungsverfahren der physikalischen/chemischen Phänomenerfassungsvorrichtung nach Anspruch 12, ferner aufweisend:
einen Schritt zum Ausbilden eines ersten Metallfilms (10a), bei dem ein erster Metallfilm (10a) durch Absetzen eines Einsatzmaterials des ersten Metallfilms (10a) auf der Lichtaufnahmeoberfläche (1a) des Lichtaufnahmeelements (1) für den Erfassungssensor ausgebildet wird, wobei
der Schritt zum Ausbilden der Opferschicht (7) ein Schritt zum Ausbilden einer Opferschicht (7) auf der Oberfläche des Einsatzmaterials für den ersten Metallfilm (10a) ist, das auf der Lichtaufnahmeoberfläche (1a) des Lichtaufnahmeelements (1) für den Erfassungssensor abgesetzt ist.

14. Herstellungsverfahren der physikalischen/chemischen Phänomenerfassungsvorrichtung nach einem der Ansprüche 12 oder 13, ferner aufweisend einen Schritt zum Ausbilden eines zweiten Metallfilms (10b), bei dem ein zweiter Metallfilm (10b) durch Absetzen eines Einsatzmaterials des zweiten Metallfilms (10b) auf einem Teil oder der Gesamtheit der Oberfläche des Membranabschnitts (2) oder der Molekülbefestigungsmembran (4), die auf dem Lichtaufnahmeelement (1) für den Erfassungssensor ausgebildet ist, gebildet wird.

15. Herstellungsverfahren der physikalischen/chemischen Phänomenerfassungsvorrichtung nach einem der Ansprüche 12 bis 14, ferner aufweisend einen Schritt zum Entfernen des Einsatzmaterials des Membranabschnitts (2) und des Molekülbefestigungsmaterials (4), das auf der Lichtaufnahmeoberfläche (1a) des Lichtaufnahmeelements (1) für den Referenzsensor abgesetzt oder laminiert ist.

## Revendications

1. Capteur physique/chimique comprenant :
une section de membrane (2) prévue sur une surface d'une surface de réception de lumière d'un élément de réception de lumière (1) de sorte que la section de membrane (2) forme un espace d'air (3) et fasse face à la surface de réception de lumière (1a), dans lequel
la section de membrane (2) présente une transparence optique et une flexibilité,
la section de membrane (2) et la surface de la surface de réception de lumière (1a) forment un résonateur de Fabry-Pérot, et
la section de membrane (2) a une capacité de fixation de substance au moins sur une surface extérieure (4a) de celle-ci, dans lequel la capacité de fixation est une capacité de fixer une molécule à la surface extérieure (4a) de la section de membrane (2) de préférence par adsorption ou liaison, **caractérisé en ce que**
le capteur physique/chimique est conçu pour détecter une molécule fixée à la surface extérieure (4a) de la section de membrane (2) en détectant le changement de contrainte superficielle sur la section de membrane (2) du fait d'une force intermoléculaire.

2. Capteur physique/chimique selon la revendication 1 comprenant :
une membrane de fixation de molécule (4) déposée uniquement sur une surface extérieure (4a) de la section de membrane (2) pour fixer une molécule contenue dans un gaz ou un liquide, dans lequel la membrane de fixation de molécule (4) est une membrane de fixation de molécule qui fixe une molécule contenue dans un gaz spécifique, ou une membrane de fixation de biopolymère qui fixe un biopolymère, ou une membrane de fixation d'anticorps qui fixe un anticorps.

3. Capteur physique/chimique selon l'une quelconque des revendications 1 et 2, comprenant en outre un film métallique (10b) déposé sur une partie ou la totalité d'une surface de la section de membrane (2), de la membrane de fixation de molécule (4), ou de la membrane de fixation d'anticorps (4).

4. Capteur physique/chimique selon l'une quelconque des revendications 1 à 3, comprenant en outre un film métallique (10a) déposé sur la surface de réception de lumière (1a) de l'élément de réception de lumière (1).

5. Réseau de capteurs utilisant le capteur physique/chimique selon l'une quelconque des revendications 1 à 4, dans lequel une pluralité des capteurs physiques/chimiques sont formés sur le même substrat.

6. Réseau de capteurs selon la revendication 5, dans lequel le substrat comporte un circuit de traitement pour traiter un signal détecté par le capteur physique/chimique, et comporte un circuit de sélection pour appliquer de manière sélective un signal aux capteurs physiques/chimiques.

7. Dispositif de détection de phénomène physique/chimique qui utilise le capteur physique/chimique selon l'une quelconque des revendications 1 à 4, comprenant :
le capteur physique/chimique selon la revendication 1 formé sur un substrat ; et
un capteur de référence formé sur le même substrat, dans lequel
le capteur de référence est construit en prévoyant une section de membrane du même type que la section de membrane utilisée pour le capteur physique/chimique sur une surface de réception de lumière d'un élément de réception de lumière (1) du même type que l'élément de réception de lumière (1) utilisé pour le capteur physique/chimique sans former d'espace d'air.

8. Dispositif de détection de phénomène physique/chimique selon la revendication 7, dans lequel
un réseau de capteurs est formé en agençant une pluralité des capteurs physiques/chimiques et des capteurs de référence dans une dimension ou deux dimensions sur le même substrat, et
le dispositif de détection de phénomène physique/chimique comporte un circuit de traitement pour traiter un signal détecté par les capteurs physiques/chimiques et un circuit de sélection pour appliquer de manière sélective un signal à l'un ou l'autre des capteurs physiques/chimiques et des capteurs de référence constituant le réseau de capteurs.

9. Procédé de fabrication d'un capteur physique/chimique selon l'une quelconque des revendications 1 à 4, comprenant :
une étape de formation d'une couche sacrificielle (7) pour former une couche sacrificielle (7) en déposant un matériau, qui peut être gravé, sur une surface de réception de lumière (1a) d'un élément de réception de lumière (1) ;
une étape de formation d'une couche de protection (9) pour déposer une couche de protection (9) sur une zone à l'exclusion d'une surface de la couche sacrificielle (7) ;
une étape de formation d'une section de membrane (2) pour former une section de membrane (2) en déposant un matériau constitutif de la section de membrane (2) sur une zone de construction de section de membrane sur la surface de la couche sacrificielle (7) à l'exclusion d'une zone traversante pour une gravure (21, 22) ;
une étape de formation d'une membrane de fixation de molécule (4) pour déposer un matériau de fixation de molécule sur la surface du matériau constitutif de la section de membrane (2) ;
une étape de retrait de la couche sacrificielle (7) pour graver la couche sacrificielle (7) en utilisant la zone traversante pour la gravure (21, 22) ; et
une étape de scellement de la zone traversante pour la gravure (21, 22) pour recouvrir (23, 24) la zone traversante pour la gravure (21, 22).

10. Procédé de fabrication du capteur physique/chimique selon la revendication 9, comprenant en outre :
une étape de formation d'un premier film métallique (10a) pour former un premier film métallique (10a) en déposant un matériau constitutif du premier film métallique (10a) sur la surface de réception de lumière (1a) de l'élément de réception de lumière (1), dans lequel
l'étape de formation de la couche sacrificielle (7) forme la couche sacrificielle (7) sur la surface du matériau constitutif du premier film métallique (10a).

11. Procédé de fabrication du capteur physique/chimique selon l'une quelconque des revendications 9 et 10, comprenant en outre une étape de formation d'un deuxième film métallique (10b) pour former un deuxième film métallique (10b) en déposant un matériau constitutif du deuxième film métallique (10b) sur une partie ou la totalité de la surface du matériau constitutif de la section de membrane (2) ou du matériau de fixation de molécule (4).

12. Procédé de fabrication d'un dispositif de détection de phénomène physique/chimique selon l'une quelconque des revendications 7 et 8, comprenant :
une étape de formation d'une couche sacrificielle (7) pour segmenter une pluralité d'éléments de réception de lumière (1) formés sur le même substrat en deux types consistant en un type pour un capteur ou des capteurs de détection et un autre type pour un capteur ou des capteurs de référence et pour former une couche sacrificielle (7) en déposant un matériau, qui peut être gravé, sur une surface de réception de lumière de l'élément de réception de lumière (1) pour le capteur de détection ;
une étape de formation d'une couche de protection (9) pour déposer une couche de protection (9) sur une zone à l'exclusion de la surface de la couche sacrificielle (7) et de la surface de réception de lumière (1a) de l'élément de réception de lumière (1) pour le capteur de référence ;
une étape de formation d'une section de membrane (2) pour former une section de membrane en déposant un matériau constitutif de la section de membrane (2) sur une zone de construction de la section de membrane (2) sur la surface de la couche sacrificielle (7) à l'exclusion d'une zone traversante pour la gravure (21, 22) et de la surface de réception de lumière (1a) de l'élément de réception de lumière (1) pour le capteur de référence ;
une étape de formation d'une membrane de fixation de molécule (4) pour déposer un matériau de fixation de molécule sur la surface du matériau constitutif de la section de membrane (2) ;
une étape de retrait de la couche sacrificielle (7) pour graver la couche sacrificielle (7) en utilisant la zone traversante pour la gravure (21, 22) ; et
une étape de scellement de la zone traversante pour la gravure (21, 22) pour recouvrir (23, 24) la zone traversante pour la gravure (21, 22).

13. Procédé de fabrication du dispositif de détection de phénomène physique/chimique selon la revendication 12, comprenant en outre :
une étape de formation d'un premier film métallique (10a) pour former un premier film métallique (10a) en déposant un matériau constitutif du premier film métallique (10a) sur la surface de réception de lumière (1a) de l'élément de réception de lumière (1) pour le capteur de détection, dans lequel
l'étape de formation d'une couche sacrificielle (7) est une étape pour former une couche sacrificielle (7) sur la surface du matériau constitutif du premier film métallique (10a) déposé sur la surface de réception de lumière (1a) de l'élément de réception de lumière (1) pour le capteur de détection.

14. Procédé de fabrication du dispositif de détection de phénomène physique/chimique selon l'une quelconque des revendications 12 et 13, comprenant en outre une étape de formation d'un deuxième film métallique (10b) pour former un deuxième film métallique (10b) en déposant un matériau constitutif du deuxième film métallique sur une partie ou la totalité de la surface de la section de membrane (2) ou de la membrane de fixation de molécule (4) formée sur l'élément de réception de lumière (1) pour le capteur de détection.

15. Procédé de fabrication du dispositif de détection de phénomène physique/chimique selon l'une quelconque des revendications 12 à 14, comprenant en outre une étape pour retirer le matériau constitutif de la section de membrane (2) et le matériau de fixation de molécule (4) déposé ou lamifié sur la surface de réception de lumière (1a) de l'élément de réception de lumière (1) pour le capteur de référence.
